# EUROPEAN PATENT APPLICATION

(11) **EP 4 477 988 A1**
(43) Date of publication of application: **18.12.2024**
(21) Application number: 22926016.1
(22) Date of filing: 27.06.2022
(51) Int. Cl.: G01B 5/00, G01B 5/02, G01B 5/20, G01B 21/00, B23Q 17/20

(54) **SHAPE ACQUISITION DEVICE, SHAPE ACQUISITION PROGRAM, SHAPE ACQUISITION METHOD, AND STYLUS**

(30) Priority: 08.02.2022 JP 2022017754
(71) Applicant: Xebec Technology Co., Ltd., Tokyo 102-0083 (JP)
(72) Inventor: FUKUSHIMA, Keisuke, Tokyo 102-0083 (JP)
(74) Representative: Plougmann Vingtoft a/s
(86) International application number: PCT/JP2022/025441
(87) International publication number: WO 2023/152997

(57) **Abstract**

A shape acquisition device 1 includes a machining center (2), a stylus (10), and a contact sensor (4) attached to a spindle (50) of the machining center (2) to hold the stylus. The machining center (2) brings the stylus (10) into contact with a first surface (7) and a second surface (8) that constitute a corner (6) of a workpiece (5) to acquire first reference coordinates C(0) and second reference coordinates D(0), then brings the stylus (10) into contact with the corner (6) from a first axis direction (X) and a second axis direction (Y) to acquire first corner coordinates (F1) and second corner coordinates (F2), and compares the first corner coordinates (F1) and the second corner coordinates (F2) with logical coordinates (E) of the corner (6) to determine a shape of the corner (6).

## Description

### Field

The present invention relates to a shape acquisition device that acquires the shape of a corner of a workpiece. The present invention also relates to a shape acquisition program that runs on a shape acquisition device to acquire the shape of a corner of a workpiece. The present invention further relates to a shape acquisition method for acquiring the shape of a corner of a workpiece. The present invention also relates to a stylus that can be used to acquire the shape of a corner of a workpiece.

### Background

A shape acquisition method that uses a stylus to measure the shape of a workpiece is described in Patent Literature 1. The stylus in this literature includes a shank and a touch portion located on the tip end side of the shank. The touch portion has a double cone shape obtained by rotating a triangle having a base on the axis of the shank around the axis. The outer peripheral end of the touch portion is a contact portion that comes into contact with a workpiece.

In this literature, the stylus having such a shape is used to measure the shape of the inner wall surface of a hole in an object to be measured. To measure the inner wall surface of a hole, the stylus is first inserted into the hole. A coordinate acquisition operation to acquire the coordinates of a contact position is then performed by moving the stylus in a direction orthogonal to the axis to bring the contact portion into contact with the inner wall surface of the hole. Thereafter, a moving operation to move the stylus in the axial direction and the coordinate acquisition operation are repeated.

### Citation List

### Patent Literature

Patent Literature 1: Japanese Patent Application Laid-open Publication No. 2014-85162

### Summary

### Technical Problem

A corner of a workpiece that has undergone a cutting process may have burrs. Currently, no shape acquisition method has been proposed to acquire the shape of such a corner including burrs by using a stylus.

In view of the above problem, an object of the present invention is to provide a shape acquisition device that acquires the shape of a corner of a workpiece including burrs. A shape acquisition program is also provided that is read by and runs on a machining center to acquire the shape of a corner of a workpiece including burrs. A shape acquisition method is further proposed for acquiring the shape of a corner of a workpiece including burrs. A stylus suitable for acquiring the shape of burrs generated in the corner is also provided.

### Solution to Problem

In order to solve the above problem, an aspect of the present invention provides a shape acquisition device for acquiring a shape of a corner where a first surface and a second surface of a workpiece intersect. The shape acquisition device includes: a machining center including a holder configured to hold the workpiece, a spindle drive mechanism configured to move a spindle in a first axis direction and a second axis direction orthogonal to each other, a control unit, and a storage unit; a stylus; and a contact sensor attached to the spindle to hold the stylus, the contact sensor being configured to input a contact signal to the control unit when the stylus comes into contact with the workpiece. The control unit includes a stylus movement control unit configured to control driving of the spindle drive mechanism and control movement of the stylus, a coordinate acquisition unit configured to acquire coordinates of a contact position at which the stylus comes into contact with the workpiece, based on the contact signal, and store and hold the acquired coordinates in the storage unit, and a shape determination unit configured to determine a shape of the corner of the workpiece based on the coordinates. The stylus movement control unit brings the stylus into contact with the first surface from the first axis direction facing the first surface, and then brings the stylus into contact with the second surface from the second axis direction facing the second surface and orthogonal to the first axis direction, and then brings the stylus into contact with the corner from the first axis direction based on logical coordinates of the corner, and thereafter brings the stylus into contact with the corner from the second axis direction based on the logical coordinates. The coordinate acquisition unit acquires, as first reference coordinates, coordinates of a first reference position at which the stylus initially comes into contact with the first surface, acquires, as second reference coordinates, coordinates of a second reference position at which the stylus initially comes into contact with the second surface, acquires, as first corner coordinates, coordinates at which the stylus comes into contact with the corner from the first axis direction, and acquires, as second corner coordinates, coordinates at which the stylus comes into contact with the corner from the second axis direction. The shape determination unit compares the first corner coordinates and the second corner coordinates individually with the logical coordinates, letting a direction from the second reference position toward the corner in the first axis direction be a first axis first direction, a direction opposite the first axis first direction be a first axis second direction, a direction from the first reference position toward the corner in the second axis direction be a second axis first direction, and a direction opposite the second axis first direction be a second axis second direction, when the first corner coordinates are located in the first axis first direction relative to the logical coordinates and the second corner coordinates match the logical coordinates, the shape determination unit determines that the workpiece has a shape with a first burr extending in the first axis first direction at the corner, and when the first corner coordinates match the logical coordinates and the second corner coordinates are located in the second axis first direction relative to the logical coordinates, the shape determination unit determines that the workpiece has a shape with a second burr extending in the second axis first direction at the corner.

Another aspect of the present invention provides a shape acquisition method for acquiring, by a shape acquisition device, a shape of a corner where a first surface and a second surface of a workpiece intersect. The shape acquisition device includes: a machining center including a holder configured to hold the workpiece, a spindle drive mechanism configured to move a spindle in a first axis direction and a second axis direction orthogonal to each other, a control unit, and a storage unit; a stylus; and a contact sensor attached to the spindle to hold the stylus, the contact sensor being configured to input a contact signal to the control unit when the stylus comes into contact with the workpiece. To acquire a shape of a corner where a first surface and a second surface of the workpiece intersect, the shape acquisition method includes: a first reference coordinate acquisition step of controlling driving of the spindle drive mechanism to bring the stylus into contact with the first surface from the first axis direction facing the first surface, acquiring coordinates of a first reference position at which the stylus comes into contact, as first reference coordinates, based on the contact signal, and storing and holding the acquired coordinates in the storage unit; a second reference coordinate acquisition step of controlling driving of the spindle drive mechanism to bring the stylus into contact with the second surface from the second axis direction facing the second surface and orthogonal to the first axis direction, acquiring coordinates of a second reference position at which the stylus comes into contact, as second reference coordinates, based on the contact signal, and storing and holding the acquired coordinates in the storage unit; a first corner coordinate acquisition step of, letting a direction from the second reference position toward the corner in the first axis direction be a first axis first direction, a direction opposite the first axis first direction be a first axis second direction, a direction from the first reference position toward the corner in the second axis direction be a second axis first direction, and a direction opposite the second axis first direction be a second axis second direction, bringing the stylus into contact with the corner from the first axis direction based on logical coordinates of the corner, acquiring first corner coordinates based on the contact signal, and storing and holding the acquired first corner coordinates in the storage unit; a second corner coordinate acquisition step of bringing the stylus into contact with the corner from the second axis direction based on the logical coordinates, acquiring second corner coordinates based on the contact signal, and storing and holding the acquired second corner coordinates in the storage unit; and a shape determination step of comparing the first corner coordinates and the second corner coordinates individually with the logical coordinates, determining that the workpiece has a shape with a first burr extending in the first axis first direction at the corner when the first corner coordinates are located in the first axis first direction relative to the logical coordinates and the second corner coordinates match the logical coordinates, and determining that the workpiece has a shape with a second burr extending in the second axis first direction at the corner when the first corner coordinates match the logical coordinates and the second corner coordinates are located in the second axis first direction relative to the logical coordinates.

In the shape acquisition device and the shape acquisition method according to the present invention, the shape of a corner of a workpiece including burrs can be acquired.

In the shape acquisition device according to the present invention, when the first corner coordinates are located in the first axis second direction relative to the logical coordinates and the second corner coordinates are located in the second axis second direction relative to the logical coordinates, the shape determination unit may determine that the workpiece has a shape with a droop at the corner. The droop refers to a state in which the edge of the corner is shaved off. In other words, the end on the second surface side of the first surface is shaved off in the first axis second direction, and the end on the first surface side of the first surface is shaved off in the second axis second direction. The shape determination unit therefore can determine that droop occurs when the first corner coordinates are located in the first axis second direction relative to the corner coordinates and the second corner coordinates are located in the second axis second direction relative to the corner coordinates.

In the shape acquisition method according to the present invention, in the shape determination step, when the first corner coordinates are located in the first axis second direction relative to the logical coordinates and the second corner coordinates are located in the second axis second direction relative to the logical coordinates, the workpiece may be determined to have a shape with a droop at the corner.

In the shape acquisition device according to the present invention, when the first corner coordinates match the logical coordinates and the second corner coordinates match the logical coordinates, the shape determination unit may determine that the workpiece has a theoretical shape at the corner.

In the shape acquisition method according to the present invention, in the shape determination step, when the first corner coordinates match the logical coordinates and the second corner coordinates match the logical coordinates, the workpiece may be determined to have a theoretical shape at the corner.

In the shape acquisition device according to the present invention, the logical coordinates may be stored and held in the storage unit, and the stylus movement control unit may acquire the logical coordinates by referring to the storage unit.

In the shape acquisition method according to the present invention, the logical coordinates may be held in the storage unit in advance, and the shape acquisition method may further include, before the first corner coordinate acquisition step, a logical coordinate acquisition step of acquiring the logical coordinates stored and held in the storage unit.

In the shape acquisition device according to the present invention, the control unit may include a logical coordinate acquisition unit configured to calculate the logical coordinates, based on the first reference coordinates and the second reference coordinates.

The shape acquisition method according to the present invention may further include, before the first corner coordinate acquisition step, a logical coordinate acquisition step of acquiring the logical coordinates stored and held in the storage unit.

In the shape acquisition device according to the present invention, the control unit may include a logical coordinate acquisition unit configured to calculate the logical coordinates. The logical coordinate acquisition unit may control driving of the spindle drive mechanism to bring the stylus into contact with a first separate position different from the first reference position from the first axis direction and acquire coordinates of the first separate position as first separate coordinates after the first reference coordinates are acquired, may control driving of the spindle drive mechanism to bring the stylus into contact with a second separate position different from the second reference position from the second axis direction and acquire coordinates of the second separate position as second separate coordinates after the second reference coordinates are acquired, and may calculate the logical coordinates based on the first reference coordinates, the first separate coordinates, the second reference coordinates, and the second separate coordinates.

In the shape acquisition method according to the present invention, a first separate coordinate acquisition step of controlling driving of the spindle drive mechanism to bring the stylus into contact with a first separate position different from the first reference position from the first axis direction and acquiring coordinates of the first separate position as first separate coordinates may be performed between the first reference coordinate acquisition step and the second reference coordinate acquisition step. The shape acquisition method may further include, in sequence, between the second reference coordinate acquisition step and the first corner coordinate acquisition step: a second separate coordinate acquisition step of controlling driving of the spindle drive mechanism to bring the stylus into contact with a second separate position different from the second reference position from the second axis direction and acquiring coordinates of the second separate position as second separate coordinates; and a logical coordinate acquisition step of calculating the logical coordinates based on the first reference coordinates, the first separate coordinates, the second reference coordinates, and the second separate coordinates.

In the shape acquisition device according to the present invention, the control unit may include a first burr shape acquisition unit configured to acquire a shape of the first burr when the workpiece is determined to have a shape with the first burr at the corner. The first burr shape acquisition unit may control driving of the spindle drive mechanism to bring the stylus into contact with a first contact position between the first reference position and the corner from the first axis direction, acquire first contact coordinates of the first contact position based on the contact signal, and store and hold the acquired first contact coordinates in the storage unit, thereafter repeat a first contact coordinate acquisition operation of acquiring the first contact coordinates and storing and holding the acquired first contact coordinates in the storage unit while changing the first contact position by controlling driving of the spindle drive mechanism to move the stylus in the second axis direction, until acquiring, as the first contact coordinates, first burr root coordinates that are first virtual line coordinates on a first virtual line passing through the first reference coordinates and the logical coordinates and are closest to the logical coordinates in a resolution at which the spindle drive mechanism moves the stylus, and thereafter acquire a first width size of a root portion of the first burr based on the logical coordinates and the first burr root coordinates. Here, the resolution at which the spindle drive mechanism moves the stylus is set as desired in the machining center.

In this case, in the shape acquisition device according to the present invention, it is preferable that the first contact position at which the first burr shape acquisition unit initially brings the stylus into contact is in a middle between the first reference position and the corner, and when the first contact coordinate acquisition operation is repeated, a binary search method is used to determine the first contact position at which the stylus is to be brought into contact next time, based on: one set of coordinates selected from the first reference coordinates, the logical coordinates, and the first contact coordinates of the first contact position at which the stylus is brought into contact second most recently, based on a difference between a component in the first axis direction of the first contact coordinates of the first contact position at which the stylus is brought into contact most recently and a component in the first axis direction of the first virtual line coordinates; and the first contact coordinates of the first contact position at which the stylus is brought into contact most recently.

The shape acquisition method according to the present invention may further include a first burr shape acquisition step of, when the workpiece is determined to have a shape with the first burr at the corner, controlling driving of the spindle drive mechanism to bring the stylus into contact with a first contact position between the first reference position and the corner from the first axis direction, acquiring first contact coordinates of the first contact position based on the contact signal, and storing and holding the acquired first contact coordinates in the storage unit, thereafter repeating a first contact coordinate acquisition operation of acquiring the first contact coordinates and storing and holding the acquired first contact coordinates in the storage unit while changing the first contact position by controlling driving of the spindle drive mechanism to move the stylus in the second axis direction, until acquiring, as the first contact coordinates, first burr root coordinates that are first virtual line coordinates on a first virtual line passing through the first reference coordinates and the logical coordinates and are closest to the logical coordinates in a resolution at which the spindle drive mechanism moves the stylus, and thereafter acquiring a first width size of a root portion of the first burr based on the logical coordinates and the first burr root coordinates.

In this case, in the shape acquisition method according to the present invention, it is preferable that in the first burr shape acquisition step, the first contact position at which the stylus is initially brought into contact is in a middle between the first reference position and the corner, and when the first contact coordinate acquisition operation is repeated, a binary search method is used to determine the first contact position at which the stylus is to be brought into contact next time, based on: one set of coordinates selected from the first reference coordinates, the logical coordinates, and the first contact coordinates of the first contact position at which the stylus is brought into contact second most recently, based on a difference between a component in the first axis direction of the first contact coordinates of the first contact position at which the stylus is brought into contact most recently and a component in the first axis direction of the first virtual line coordinates; and the first contact coordinates of the first contact position at which the stylus is brought into contact most recently.

In the shape acquisition device according to the present invention, the control unit may include a second burr shape acquisition unit configured to acquire a shape of the second burr when the workpiece is determined to have a shape with the second burr at the corner. The second burr shape acquisition unit may control driving of the spindle drive mechanism to bring the stylus into contact with a second contact position between the second reference position and the corner from the second axis direction, acquire second contact coordinates of the second contact position based on the contact signal, and store and hold the acquired second contact coordinates in the storage unit, thereafter repeat a second contact coordinate acquisition operation of acquiring the second contact coordinates and storing and holding the acquired second contact coordinates in the storage unit while changing the second contact position by controlling driving of the spindle drive mechanism to move the stylus in the first axis direction, until acquiring, as the second contact coordinates, second burr root coordinates that are second virtual line coordinates on a second virtual line passing through the second reference coordinates and the logical coordinates and are closest to the logical coordinates in a resolution at which the spindle drive mechanism moves the stylus, and thereafter acquire a second width size of a root portion of the second burr based on the logical coordinates and the second burr root coordinates.

In this case, in the shape acquisition device according to the present invention, it is preferable that the second contact position at which the second burr shape acquisition unit initially brings the stylus into contact is in a middle between the second reference position and the corner, and when the second contact coordinate acquisition operation is repeated, a binary search method is used to determine the second contact position at which the stylus is to be brought into contact next time, based on: one set of coordinates selected from the second reference coordinates, the logical coordinates, and the second contact coordinates of the second contact position at which the stylus is brought into contact second most recently, based on a difference between a component in the second axis direction of the second contact coordinates of the second contact position at which the stylus is brought into contact most recently and a component in the second axis direction of the second virtual line coordinates; and the second contact coordinates of the second contact position at which the stylus is brought into contact most recently.

The shape acquisition method according to the present invention may further include a second burr shape acquisition step of, when the workpiece is determined to have a shape with the second burr at the corner, controlling driving of the spindle drive mechanism to bring the stylus into contact with a second contact position between the second reference position and the corner from the second axis direction, acquiring second contact coordinates of the second contact position based on the contact signal, and storing and holding the acquired second contact coordinates in the storage unit, thereafter repeating a second contact coordinate acquisition operation of acquiring the second contact coordinates and storing and holding the acquired second contact coordinates in the storage unit while changing the second contact position by controlling driving of the spindle drive mechanism to move the stylus in the first axis direction, until acquiring, as the second contact coordinates, second burr root coordinates that are second virtual line coordinates on a second virtual line passing through the second reference coordinates and the logical coordinates and are closest to the logical coordinates in a resolution at which the spindle drive mechanism moves the stylus, and thereafter acquiring a second width size of a root portion of the second burr based on the logical coordinates and the second burr root coordinates.

In this case, in the shape acquisition method according to the present invention, it is preferable that in the second burr shape acquisition step, the second contact position at which the stylus is initially brought into contact is in a middle between the second reference position and the corner, and when the second contact coordinate acquisition operation is repeated, a binary search method is used to determine the second contact position at which the stylus is to be brought into contact next time, based on: one set of coordinates selected from the second reference coordinates, the logical coordinates, and the second contact coordinates of the second contact position at which the stylus is brought into contact second most recently, based on a difference between a component in the second axis direction of the second contact coordinates of the second contact position at which the stylus is brought into contact most recently and a component in the second axis direction of the second virtual line coordinates; and the second contact coordinates of the second contact position at which the stylus is brought into contact most recently.

In the shape acquisition device according to the present invention, the control unit may include a droop shape acquisition unit configured to acquire a shape of the droop when the workpiece is determined to have a shape with the droop at the corner. The droop shape acquisition unit may control driving of the spindle drive mechanism to bring the stylus into contact with a first contact position between the first reference position and the corner from the first axis direction, acquire first contact coordinates of the first contact position based on the contact signal, and store and hold the acquired first contact coordinates in the storage unit, thereafter repeat a third contact coordinate acquisition operation of acquiring the first contact coordinates and storing and holding the acquired first contact coordinates in the storage unit while changing the first contact position by controlling driving of the spindle drive mechanism to move the stylus in the second axis direction, until acquiring, as the first contact coordinates, droop start coordinates that are first virtual line coordinates on a first virtual line passing through the first reference coordinates and the logical coordinates and are closest to the logical coordinates in a resolution at which the spindle drive mechanism moves the stylus, and thereafter acquire a third width size of the first surface of the droop based on the droop start coordinates.

In this case, in the shape acquisition device according to the present invention, it is preferable that the first contact position at which the droop shape acquisition unit initially brings the stylus into contact is in a middle between the first reference position and the corner, and when the third contact coordinate acquisition operation is repeated, a binary search method is used to determine the first contact position at which the stylus is to be brought into contact next time, based on: one set of coordinates selected from the first reference coordinates, the logical coordinates, and the first contact coordinates of the first contact position at which the stylus is brought into contact second most recently, based on a difference between a component in the first axis direction of the first contact coordinates of the first contact position at which the stylus is brought into contact most recently and a component in the first axis direction of the first virtual line coordinates; and the first contact coordinates of the first contact position at which the stylus is brought into contact most recently.

The shape acquisition method according to the present invention may further include a droop shape acquisition step of, when the workpiece is determined to have a shape with the droop at the corner, controlling driving of the spindle drive mechanism to bring the stylus into contact with a first contact position between the first reference position and the corner from the first axis direction, acquiring first contact coordinates of the first contact position based on the contact signal, and storing and holding the acquired first contact coordinates in the storage unit, thereafter repeating a third contact coordinate acquisition operation of acquiring the first contact coordinates and storing and holding the acquired first contact coordinates in the storage unit while changing the first contact position by controlling driving of the spindle drive mechanism to move the stylus in the second axis direction, until acquiring, as the first contact coordinates, droop start coordinates that are first virtual line coordinates on a first virtual line passing through the first reference coordinates and the logical coordinates and are closest to the logical coordinates in a resolution at which the spindle drive mechanism moves the stylus, and thereafter acquiring a third width size of the first surface of the droop based on the droop start coordinates.

In this case, in the shape acquisition method according to the present invention, it is preferable that in the droop shape acquisition step, the first contact position at which the stylus is initially brought into contact is in a middle between the first reference position and the corner, and when the third contact coordinate acquisition operation is repeated, a binary search method is used to determine the first contact position at which the stylus is to be brought into contact next time, based on: one set of coordinates selected from the first reference coordinates, the logical coordinates, and the first contact coordinates of the first contact position at which the stylus is brought into contact second most recently, based on a difference between a component in the first axis direction of the first contact coordinates of the first contact position at which the stylus is brought into contact most recently and a component in the first axis direction of the first virtual line coordinates; and the first contact coordinates of the first contact position at which the stylus is brought into contact most recently.

In the shape acquisition device according to the present invention, the stylus may include a shaft having an axis extending in the first axis direction and a touch portion located on a distal end side of the shaft. The touch portion may include a first contact portion located at a distal end in the first axis direction and a second contact portion having an annular shape, the second contact portion surrounding the axis between the shaft and the first contact portion in the first axis direction. The second contact portion may be located on an outer peripheral side of the first contact portion and the shaft when viewed from the first axis direction. The first contact portion and the second contact portion may be connected by a first depressed curve surface having an annular shape and depressed to the axis side from the second contact portion toward the first contact portion. The second contact portion and the shaft may be connected by a second depressed curve surface depressed to the axis side from the second contact portion toward the shaft. The first contact portion may come into contact with the first surface, and the second contact portion may come into contact with the second surface. In this manner, the stylus includes the first contact portion that can touch the workpiece from the first axis direction, and the second contact portion that can touch the workpiece from the second axis direction. The first contact portion and the second contact portion in the axial direction are connected by the annular first depressed curve surface that is depressed to the axis side from the second contact portion toward the first contact portion. Therefore, when the first burr rises from the first surface, the first contact portion can be brought into contact with the vicinity of the first burr on the first surface without interference between the touch portion of the stylus and the first burr. The second contact portion and the first contact portion in the second axis direction are connected by the first depressed curve surface, and the second contact portion and the shaft are connected by the second depressed curve surface that is depressed to the axis side from the second contact portion toward the shaft. Therefore, when the second burr rises from the second surface, the second contact portion can be brought into contact with the vicinity of the second burr on the second surface without interference between the touch portion of the stylus and the second burr.

A shape acquisition program according to another aspect of the present invention runs on a control unit of a shape acquisition device to cause the shape acquisition device to perform each step of a shape processing method. The shape acquisition device includes: a machining center including a holder configured to hold the workpiece, a spindle drive mechanism configured to move a spindle in a first axis direction and a second axis direction orthogonal to each other, the control unit, and a storage unit; a stylus; and a contact sensor attached to the spindle to hold the stylus, the contact sensor being configured to input a contact signal to the control unit when the stylus comes into contact with the workpiece.

Specifically, the present invention provides a shape acquisition program that runs on a control unit of a shape acquisition device to acquire a shape of a corner where a first surface and a second surface of a workpiece intersect. The shape acquisition device includes: a machining center including a holder configured to hold the workpiece, a spindle drive mechanism configured to move a spindle in a first axis direction and a second axis direction orthogonal to each other, the control unit, and a storage unit; a stylus; and a contact sensor attached to the spindle to hold the stylus, the contact sensor being configured to input a contact signal to the control unit when the stylus comes into contact with the workpiece. The shape acquisition program includes, in sequence: a first reference coordinate acquisition step of controlling driving of the spindle drive mechanism to bring the stylus into contact with the first surface from the first axis direction facing the first surface, acquiring coordinates of a first reference position at which the stylus comes into contact, as first reference coordinates, based on the contact signal, and storing and holding the acquired coordinates in the storage unit; a second reference coordinate acquisition step of controlling driving of the spindle drive mechanism to bring the stylus into contact with the second surface from the second axis direction facing the second surface and orthogonal to the first axis direction, acquiring coordinates of a second reference position at which the stylus comes into contact, as second reference coordinates, based on the contact signal, and storing and holding the acquired coordinates in the storage unit; a first corner coordinate acquisition step of, letting a direction from the second reference position toward the corner in the first axis direction be a first axis first direction, a direction opposite the first axis first direction be a first axis second direction, a direction from the first reference position toward the corner in the second axis direction be a second axis first direction, and a direction opposite the second axis first direction be a second axis second direction, bringing the stylus into contact with the corner from the first axis direction based on logical coordinates of the corner, acquiring first corner coordinates based on the contact signal, and storing and holding the acquired first corner coordinates in the storage unit; a second corner coordinate acquisition step of bringing the stylus into contact with the corner from the second axis direction based on the logical coordinates, acquiring second corner coordinates based on the contact signal, and storing and holding the acquired second corner coordinates in the storage unit; and a shape determination step of comparing the first corner coordinates and the second corner coordinates individually with the logical coordinates, determining that the workpiece has a shape with a first burr extending in the first axis first direction at the corner when the first corner coordinates are located in the first axis first direction relative to the logical coordinates and the second corner coordinates match the logical coordinates, and determining that the workpiece has a shape with a second burr extending in the second axis first direction at the corner when the first corner coordinates match the logical coordinates and the second corner coordinates are located in the second axis first direction relative to the logical coordinates.

In the present invention, in the shape determination step, when the first corner coordinates are located in the first axis second direction relative to the logical coordinates and the second corner coordinates are located in the second axis second direction relative to the logical coordinates, the workpiece may be determined to have a shape with a droop at the corner.

In the present invention, in the shape determination step, when the first corner coordinates match the logical coordinates and the second corner coordinates match the logical coordinates, the workpiece may be determined to have a theoretical shape at the corner.

In the present invention, a logical coordinate acquisition step of acquiring the logical coordinates stored and held in the storage unit may be provided before the first corner coordinate acquisition step.

In the present invention, a logical coordinate acquisition step of calculating the logical coordinates of the corner based on the first reference coordinates and the second reference coordinates may be provided between the second reference coordinate acquisition step and the first corner coordinate acquisition step.

In the present invention, a first separate coordinate acquisition step of controlling driving of the spindle drive mechanism to bring the stylus into contact with a first separate position different from the first reference position from the first axis direction and acquiring coordinates of the first separate position as first separate coordinates based on the contact signal may be performed between the first reference coordinate acquisition step and the second reference coordinate acquisition step. The following steps are provided, in sequence, between the second reference coordinate acquisition step and the first corner coordinate acquisition step: a second separate coordinate acquisition step of controlling driving of the spindle drive mechanism to bring the stylus into contact with a second separate position different from the second reference position from the second axis direction and acquiring coordinates of the second separate position as second separate coordinates; and a logical coordinate acquisition step of calculating the logical coordinates based on the first reference coordinates, the first separate coordinates, the second reference coordinates, and the second separate coordinates.

In the present invention, a first burr shape acquisition step may be provided, which when the workpiece is determined to have a shape with the first burr at the corner, controls driving of the spindle drive mechanism to bring the stylus into contact with a first contact position between the first reference position and the corner from the first axis direction, acquires first contact coordinates of the first contact position based on the contact signal, and stores and holds the acquired first contact coordinates in the storage unit, thereafter repeats a first contact coordinate acquisition operation of acquiring the first contact coordinates and storing and holding the acquired first contact coordinates in the storage unit while changing the first contact position by controlling driving of the spindle drive mechanism to move the stylus in the second axis direction, until acquiring, as the first contact coordinates, first burr root coordinates that are first virtual line coordinates on a first virtual line passing through the first reference coordinates and the logical coordinates and are closest to the logical coordinates in a resolution at which the spindle drive mechanism moves the stylus, and thereafter acquires a first width size of a root portion of the first burr based on the logical coordinates and the first burr root coordinates.

In this case, in the first burr shape acquisition step, the first contact position at which the stylus is initially brought into contact may be in a middle between the first reference position and the corner, and when the first contact coordinate acquisition operation is repeated, a binary search method may be used to determine the first contact position at which the stylus is to be brought into contact next time, based on: one set of coordinates selected from the first reference coordinates, the logical coordinates, and the first contact coordinates of the first contact position at which the stylus is brought into contact second most recently, based on a difference between a component in the first axis direction of the first contact coordinates of the first contact position at which the stylus is brought into contact most recently and a component in the first axis direction of the first virtual line coordinates; and the first contact coordinates of the first contact position at which the stylus is brought into contact most recently.

In the present invention, a second burr shape acquisition step may be provided, which when the workpiece is determined to have a shape with the second burr at the corner, controls driving of the spindle drive mechanism to bring the stylus into contact with a second contact position between the second reference position and the corner from the second axis direction, acquires second contact coordinates of the second contact position based on the contact signal, and stores and holds the acquired second contact coordinates in the storage unit, thereafter repeats a second contact coordinate acquisition operation of acquiring the second contact coordinates and storing and holding the acquired second contact coordinates in the storage unit while changing the second contact position by controlling driving of the spindle drive mechanism to move the stylus in the first axis direction, until acquiring, as the second contact coordinates, second burr root coordinates that are second virtual line coordinates on a second virtual line passing through the second reference coordinates and the logical coordinates and are closest to the logical coordinates in a resolution at which the spindle drive mechanism moves the stylus, and thereafter acquires a second width size of a root portion of the second burr based on the logical coordinates and the second burr root coordinates.

In this case, in the second burr shape acquisition step, the second contact position at which the stylus is initially brought into contact may be in a middle between the second reference position and the corner, and when the second contact coordinate acquisition operation is repeated, a binary search method may be used to determine the second contact position at which the stylus is to be brought into contact next time, based on: one set of coordinates selected from the second reference coordinates, the logical coordinates, and the second contact coordinates of the second contact position at which the stylus is brought into contact second most recently, based on a difference between a component in the second axis direction of the second contact coordinates of the second contact position at which the stylus is brought into contact most recently and a component in the second axis direction of the second virtual line coordinates; and the second contact coordinates of the second contact position at which the stylus is brought into contact most recently.

In the present invention, a droop shape acquisition step may be provided, which when the workpiece is determined to have a shape with the droop at the corner, controls driving of the spindle drive mechanism to bring the stylus into contact with a first contact position between the first reference position and the corner from the first axis direction, acquires first contact coordinates of the first contact position based on the contact signal, and stores and holds the acquired first contact coordinates in the storage unit, thereafter repeats a third contact coordinate acquisition operation of acquiring the first contact coordinates and storing and holding the acquired first contact coordinates in the storage unit while changing the first contact position by controlling driving of the spindle drive mechanism to move the stylus in the second axis direction, until acquiring, as the first contact coordinates, droop start coordinates that are first virtual line coordinates on a first virtual line passing through the first reference coordinates and the logical coordinates and are closest to the logical coordinates in a resolution at which the spindle drive mechanism moves the stylus, and thereafter acquires a third width size of the first surface of the droop based on the droop start coordinates.

In this case, in the droop shape acquisition step, the first contact position at which the stylus is initially brought into contact is in a middle between the first reference position and the corner, and when the third contact coordinate acquisition operation is repeated, a binary search method is used to determine the first contact position at which the stylus is to be brought into contact next time, based on: one set of coordinates selected from the first reference coordinates, the logical coordinates, and the first contact coordinates of the first contact position at which the stylus is brought into contact second most recently, based on a difference between a component in the first axis direction of the first contact coordinates of the first contact position at which the stylus is brought into contact most recently and a component in the first axis direction of the first virtual line coordinates; and the first contact coordinates of the first contact position at which the stylus is brought into contact most recently.

According to an aspect of the present invention, a stylus includes a shaft and a touch portion located on a distal end side of the shaft. The touch portion includes a first contact portion located at a distal end in an axial direction along an axis of the shaft, and a second contact portion having an annular shape, the second contact portion surrounding the axis between the shaft and the first contact portion in the axial direction. The second contact portion is located on an outer peripheral side of the first contact portion and the shaft when viewed from the axial direction. The first contact portion and the second contact portion are connected by a first depressed curve surface having an annular shape and depressed to the axis side from the second contact portion toward the first contact portion. The second contact portion and the shaft are connected by a second depressed curve surface having an annular shape and depressed to the axis side from the second contact portion toward the shaft.

### Advantageous Effects of Invention

The shape acquisition device and the shape acquisition method according to the present invention can acquire the shape of a corner of a workpiece, including burrs present at the corner. Further, the shape acquisition program according to the present invention can run on the control unit of the shape acquisition device to acquire the shape of a corner of a workpiece, including burrs present at the corner. In addition, the stylus according to the present invention can prevent or suppress interference between the touch portion of the stylus and a workpiece when the first contact portion or the second contact portion of the stylus is brought into contact with the workpiece.

### Brief Description of Drawings

FIG. 1 is an illustration of a shape acquisition method.
FIG. 2 is a perspective view of a stylus.
FIG. 3 is a flowchart of a shape acquisition method for acquiring the shape of a corner.
FIG. 4 is an illustration of the shape acquisition method for acquiring the shape of a corner.
FIG. 5 is a flowchart of a first burr shape acquisition mode.
FIG. 6 is an illustration of the first burr shape acquisition mode.
FIG. 7 is a flowchart of a second burr shape acquisition mode.
FIG. 8 is an illustration of the second burr shape acquisition mode.
FIG. 9 is a flowchart of a droop shape acquisition step.
FIG. 10 is an illustration of the droop shape acquisition step.
FIG. 11 is a flowchart of a method of calculating logical coordinates of a corner where first and second surfaces are inclined.
FIG. 12 is an illustration of the method of calculating logical coordinates of a corner where first and second surfaces are inclined.
FIG. 13 is an illustration of a correction method for correcting the value of a second burr height.

### Description of Embodiments

A shape acquisition method, a shape acquisition program, a shape acquisition method, and a stylus according to embodiments of the present invention will be described below with reference to the drawings.

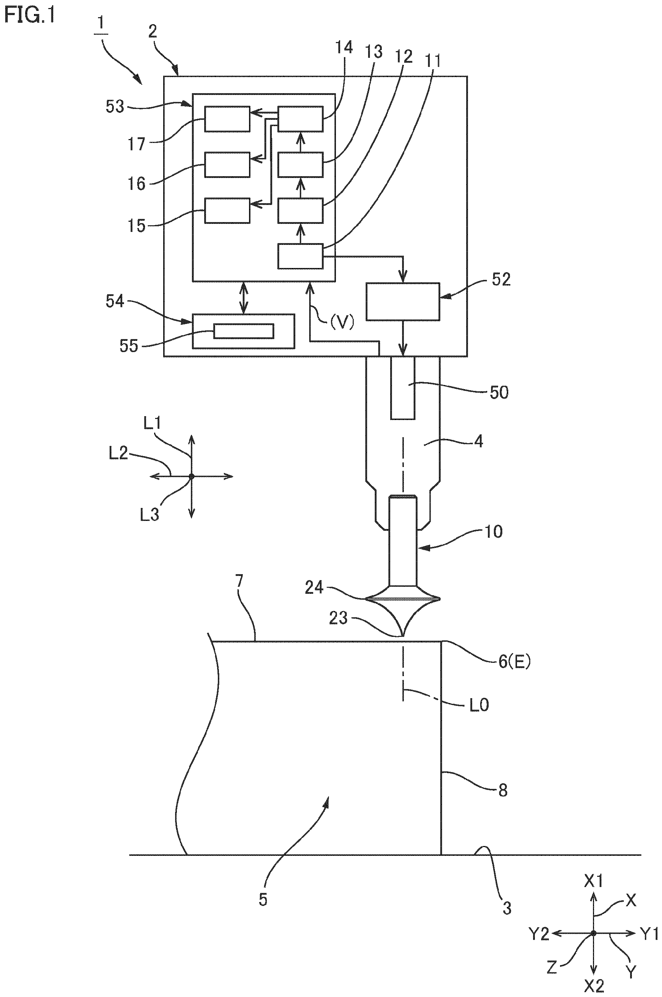

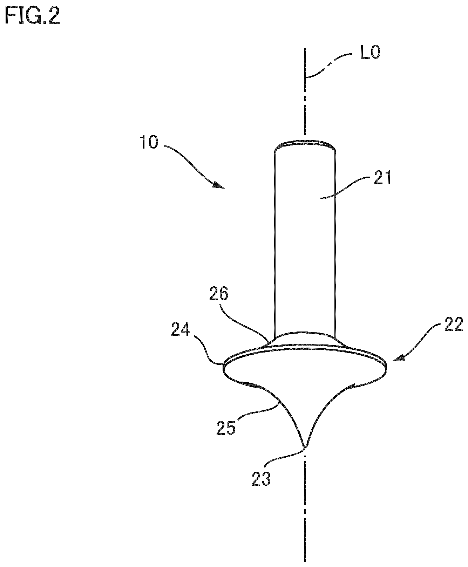

FIG. 1 is an illustration of a shape acquisition device in this example. FIG. 2 is a perspective view of a stylus to be attached to the shape measuring device. As illustrated in FIG. 1, a shape acquisition device 1 in this example has a machining center 2, a stylus 10, and a contact sensor 4 that is attached to a spindle 50 of the machining center 2 and holds the stylus 10. The machining center 2 includes a table 51 (holder) that holds a workpiece 5, a spindle 50, and a spindle drive mechanism 52 that moves the spindle 50. The control system of the machining center 2 includes a control unit 53 that controls the operation of the machining center 2 and a storage unit 54. The contact sensor 4 inputs a contact signal V to the control unit 53 when the stylus 10 touches the workpiece 5.

The shape acquisition device 1 acquires the shape of a corner 6 of the workpiece 5 held on the table 51. In this example, the machining center 2 functions as the shape acquisition device 1. Therefore, after a cutting process is performed on the workpiece 5 with a cutting tool attached to the spindle 50 of the machining center 2, a shape measurement operation to acquire the shape of the corner 6 of the workpiece 5 can be performed without removing the workpiece 5 from the machining center 2.

In the following description, three axes orthogonal to each other will be referred to as a first axis L1, a second axis L2, and a third axis L3. The direction along the first axis L1 is referred to as first axis direction X. The direction along the second axis L2 is referred to as second axis direction Y. The direction along the third axis L3 is referred to as third axis direction Z. The spindle drive mechanism 52 of the machining center 2 moves the spindle 50 in the first axis direction X, the second axis direction Y, and the third axis direction Z. In this example, the first axis direction X is the direction along the spindle 50 and is the vertical direction. The second axis direction Y is the horizontal direction. One side of the first axis direction is referred to as first axis first direction, and the opposite side thereof is referred to as first axis second direction. One side of the second axis direction is referred to as second axis first direction, and the opposite side thereof is referred to as second axis second direction. In the following, XY coordinates located on a plane including the first axis L1 and the second axis L2 will be described.

The control unit 53 includes a CPU, a ROM, a RAM, and the like. A shape acquisition program 55 which is an application program for controlling driving of the machining center 2 is stored and held in the storage unit 54. In addition, various data for shape acquisition are stored and held in the storage unit 54.

When the machining center 2, the contact sensor 4, and the stylus 10 are allowed to function as the shape acquisition device 1, the control unit 53 reads the shape acquisition program 55. The shape acquisition program 55 causes the control unit 53 to function as a stylus movement control unit 11, a coordinate acquisition unit 12, a logical coordinate acquisition unit 13, and a shape determination unit 14. The shape acquisition program 55 also causes the control unit 53 to function as a first burr shape acquisition unit 15, a second burr shape acquisition unit 16, and a droop shape acquisition unit 17. Details of the control unit 53 will be described later.

As illustrated in FIG. 2, the stylus 10 includes a shaft 21 and a touch portion 22 located on the distal end side of the shaft 21. The stylus 10 is used by being connected at a proximal end portion of the shaft 21, that is, a portion opposite to the touch portion 22 of the shaft 21, to the spindle 50 of the machining center 2. The touch portion 22 includes a first contact portion 23 located at the distal end in the axial direction along the axis L0 of the shaft 21, and an annular second contact portion 24 surrounding the axis L0 between the shaft 21 and the first contact portion 23 in the axial direction. The second contact portion 24 is located on the outer peripheral side of the first contact portion 23 and the shaft 21 when viewed from the axial direction. The second contact portion 24 is coaxial with the shaft 21.

The first contact portion 23 and the second contact portion 24 are connected by an annular first depressed curve surface 25 that is depressed to the axis L0 side from the second contact portion 24 toward the first contact portion 23. The second contact portion 24 and the shaft 21 are connected by an annular second depressed curve surface 26 that is depressed to the axis L0 side from the second contact portion 24 toward the shaft 21.

As illustrated in FIG. 1, the spindle 50, the contact sensor 4, and the stylus 10 are coaxial in a state which the stylus 10 is connected to the spindle 50 of the machining center 2 through the contact sensor 4. The axis L0 of the stylus 10 therefore extends in the first axis direction X. Thus, the stylus 10 includes the first contact portion 23 that can touch the workpiece 5 from the first axis direction X, and the second contact portion 24 that can touch the workpiece 5 from the second axis direction Y orthogonal to the first axis direction X.

In this example, the workpiece 5 has a first surface 7, which is a top surface, a second surface 8, which is a side surface, and a corner 6 where the first surface 7 and the second surface 8 intersect, as illustrated in FIG. 1. In this example, the first surface 7 is perpendicular to the first axis L in a state in which the workpiece 5 is held on the table 51 of the machining center 2. The second surface 8 is perpendicular to the second axis L2. The first surface 7 therefore extends in the second axis direction Y, and the second surface 8 extends in the first axis direction X.

### (Control Unit)

The shape acquisition program 55 causes the control unit 53 to function as the stylus movement control unit 11, the coordinate acquisition unit 12, the logical coordinate acquisition unit 13, and the shape determination unit 14.

The stylus movement control unit 11 controls the movement of the stylus 10 connected to the spindle 50 by controlling driving of the spindle drive mechanism 52. Specifically, the stylus movement control unit 11 brings the stylus 10 into contact with the first surface 7 from the first axis direction X facing the first surface 7, and then brings the stylus 10 into contact with the second surface 8 from the second axis direction Y facing the second surface 8 and orthogonal to the first axis direction X. The stylus movement control unit 11 then brings the stylus 10 into contact with the corner 6 from the first axis direction X based on logical coordinates E of the corner 6. After doing so, the stylus movement control unit 11 brings the stylus 10 into contact with the corner 6 from the second axis direction Y based on the logical coordinates E.

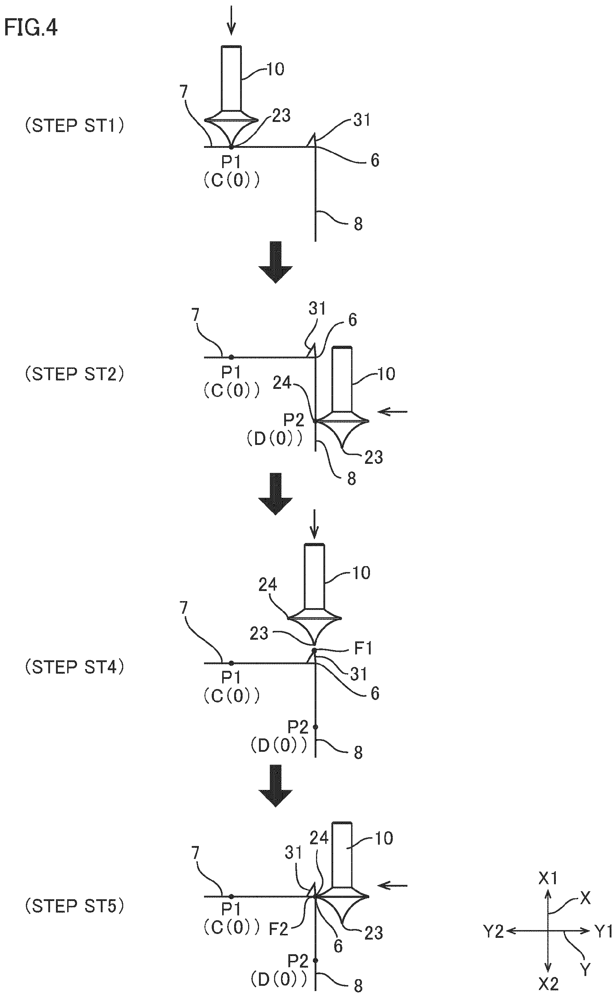

The coordinate acquisition unit 12 acquires the coordinates of the contact position at which the stylus 10 comes into contact with the workpiece 5, based on the contact signal V from the contact sensor 4, and stores and holds the acquired coordinates in the storage unit 54. Specifically, the coordinate acquisition unit 12 acquires the coordinates of a first reference position P1 (see FIG. 4 below) at which the stylus 10 initially comes into contact with the first surface 7, as first reference coordinates, and stores and holds the acquired coordinates in the storage unit 54. The coordinate acquisition unit 12 also acquires the coordinates of a second reference position P2 (see FIG. 4 below) at which the stylus 10 initially comes into contact with the second surface 8, as second reference coordinates, and stores and holds the acquired coordinates in the storage unit 54. Further, the coordinate acquisition unit 12 acquires the coordinates at which the stylus 10 comes into contact with the corner 6 from the first axis direction X, as first corner coordinates, and stores and holds the acquired coordinates in the storage unit 54. The coordinate acquisition unit 12 also acquires the coordinates at which the stylus 10 comes into contact with the corner 6 from the second axis direction Y, as second corner coordinates, and stores and holds the acquired coordinates in the storage unit 54.

The logical coordinate acquisition unit 13 calculates the logical coordinates E of the corner 6, based on the first reference coordinates of the first reference position P1 and the second reference coordinates of the second reference position P2. In this example, the first surface 7 of the workpiece 5 extends along the second axis L2, and the second surface 8 extends along the first axis L1. The component in the first axis direction X of the logical coordinates E of the corner 6 is therefore the component in the first axis direction X of the first reference position P1, and the component in the second axis direction Y of the logical coordinates E of the corner 6 is the component in the second axis direction Y of the second reference position P2.

Here, the first axis first direction X1 is the direction from the second reference position P2 toward the corner 6 in the first axis direction X, and the first axis second direction X2 is the opposite direction thereof. The first axis first direction X1 is upward, and the first axis second direction X2 is downward. The second axis first direction Y1 is the direction from the first reference position P1 toward the corner 6 in the second axis direction Y, and the second axis second direction Y2 is the opposite direction thereof. The second axis first direction Y1 is one side of the horizontal direction, and the second axis second direction Y2 is the other side of the horizontal direction.

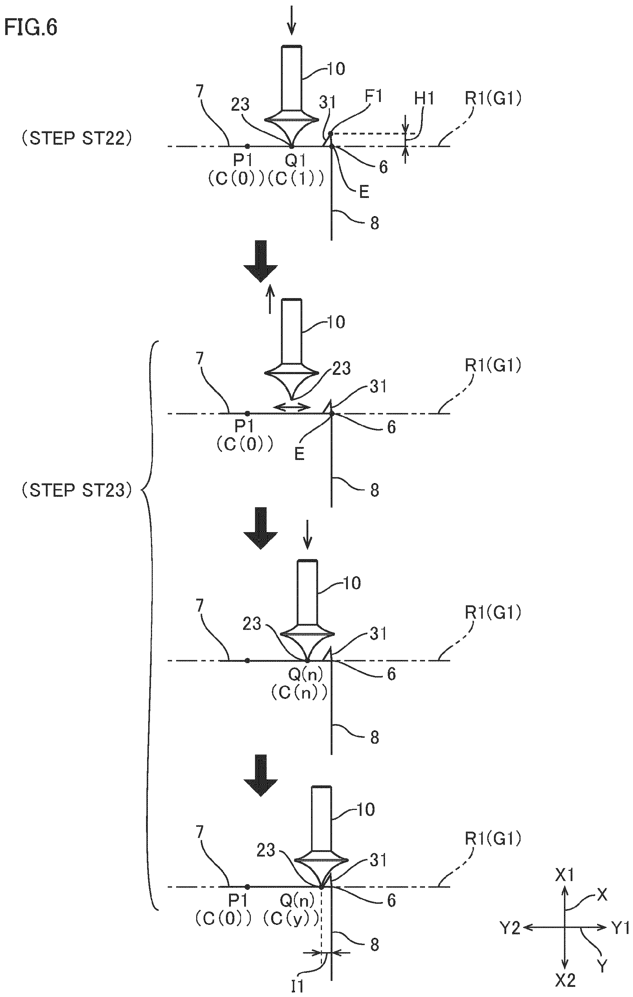

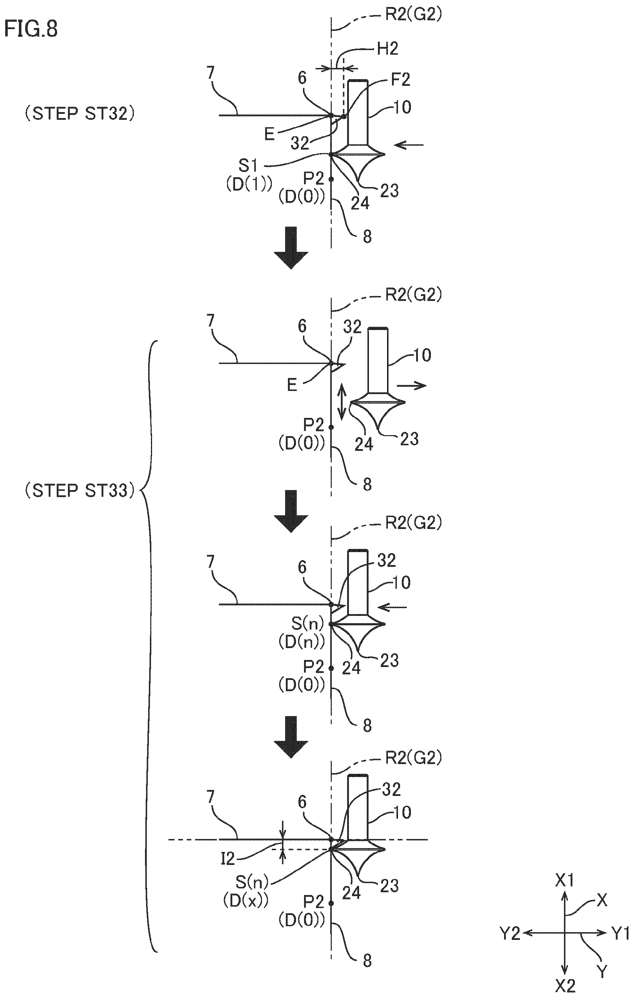

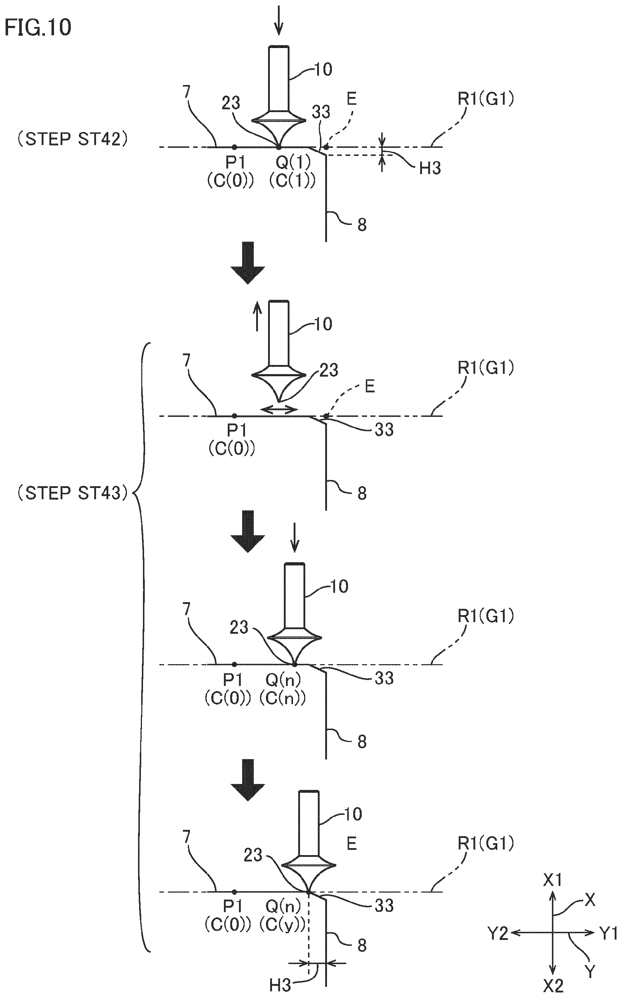

The shape determination unit 14 determines whether the shape of the corner 6 of the workpiece 5 is a shape with a first burr 31 (see FIG. 6 below) extending in the first axis direction X, or a shape with a second burr 32 (see FIG. 8 below) extending in the second axis direction Y, or a shape with a droop 33 (see FIG. 10 below), or a theoretical shape without the burrs 31, 32 and the droop 33. The droop 33 refers to a state in which the edge of the corner 6 is shaved off.

Specifically, the shape determination unit 14 calculates the shape of the corner 6 of the workpiece 5 based on the coordinates acquired by the coordinate acquisition unit 12. In other words, the shape determination unit 14 compares the first corner coordinates and the second corner coordinates individually with the logical coordinates E. If the first corner coordinates are located in the first axis first direction relative to the logical coordinates E and the second corner coordinates match the logical coordinates E, the shape determination unit 14 determines that the workpiece 5 has a shape with the first burr 31 extending in the first axis first direction at the corner 6. If the first corner coordinates match the logical coordinates E and the second corner coordinates are located in the second axis first direction relative to the logical coordinates E, the shape determination unit 14 determines that the workpiece 5 has a shape with the second burr 32 extending in the second axis first direction at the corner 6. Further, if the first corner coordinates are located in the first axis second direction relative to the logical coordinates E and the second corner coordinates are located in the second axis second direction relative to the logical coordinates E, the shape determination unit 14 determines that the workpiece 5 has a shape with the droop 33 at the corner 6. If the first corner coordinates match the logical coordinates E and the second corner coordinates match the logical coordinates E, the shape determination unit 14 determines that the workpiece 5 has a theoretical shape at the corner 6.

The shape acquisition program 55 also causes the control unit 53 to function as the first burr shape acquisition unit 15, the second burr shape acquisition unit 16, and the droop shape acquisition unit 17.

The first burr shape acquisition unit 15 acquires the shape of the first burr 31 when the shape of the corner 6 of the workpiece 5 is determined to be a shape with the first burr 31. In other words, the first burr shape acquisition unit 15 calculates the height of the first burr 31 in the first axis direction X based on the first corner coordinates and the logical coordinates E. Specifically, the difference between the component in the first axis direction X of the first corner coordinates and the component in the first axis direction X of the logical coordinates E of the corner 6 is calculated and acquired as first burr height H1.

When it is determined that the workpiece 5 has a shape with the first burr 31 at the corner 6, the first burr shape acquisition unit 15 controls driving of the spindle drive mechanism 52 to bring the stylus 10 into contact with a first contact position between the first reference position P1 and the corner 6 from the first axis direction X, acquires the first contact coordinates of the first contact position based on the contact signal V, and stores and holds the acquired first contact coordinates in the storage unit 54. After doing so, the first burr shape acquisition unit 15 repeats a first contact coordinate acquisition operation of acquiring the first contact coordinates and storing and holding the acquired first contact coordinates in the storage unit 54 while changing the first contact position by controlling driving of the spindle drive mechanism 52 to move the stylus 10 in the second axis direction Y, until acquiring, as the first contact coordinates, first burr root coordinates that are first virtual line coordinates on a first virtual line passing through the first reference coordinates and the logical coordinates E and are closest to the logical coordinates E in a resolution at which the spindle drive mechanism 52 moves the stylus 10. Thereafter, the first burr shape acquisition unit 15 acquires a first width size of the root portion of the first burr 31 based on the logical coordinates E and the first burr root coordinates. Here, the resolution at which the spindle drive mechanism 52 moves the stylus 10 may be the original resolution of the spindle drive mechanism 52. The resolution at which the spindle drive mechanism 52 moves the stylus 10 is a resolution set as desired in the spindle drive mechanism 52. In other words, the shape acquisition program 55 sets the resolution of the spindle drive mechanism 52 to any desired value.

In this example, the first contact position at which the first burr shape acquisition unit 15 initially brings the stylus 10 into contact is in the middle between the first reference position P1 and the corner 6. When repeating the first contact coordinate acquisition operation, the first burr shape acquisition unit 15 uses a binary search method and determines the first contact position at which the stylus 10 is to be brought into contact next time, based on: one set of coordinates selected from the first reference coordinates, the logical coordinates E, and the first contact coordinates of the first contact position at which the stylus 10 is brought into contact second most recently, based on the difference between the component in the first axis direction X of the first contact coordinates of the first contact position at which the stylus 10 is brought into contact most recently and the component in the first axis direction X of the first virtual line coordinates; and the first contact coordinates of the first contact position at which the stylus 10 is brought into contact most recently.

The second burr shape acquisition unit 16 acquires the shape of the second burr 32 when the shape of the corner 6 of the workpiece 5 is determined to be a shape with the second burr 32. In other words, the second burr shape acquisition unit 16 calculates the height of the second burr 32 in the second axis direction Y based on the second corner coordinates and the logical coordinates E. Specifically, the difference between the component in the second axis direction Y of the second corner coordinates F2 and the component in the second axis direction Y of the logical coordinates E of the corner 6 is calculated and acquired as second burr height H2.

The second burr shape acquisition unit 16 also controls driving of the spindle drive mechanism 52 to bring the stylus 10 into contact with a second contact position between the second reference position P2 and the corner 6 from the second axis direction Y, acquires the second contact coordinates of the second contact position based on the contact signal V, and stores and holds the acquired second contact coordinates in the storage unit 54. After doing so, the second burr shape acquisition unit 16 repeats a second contact coordinate acquisition operation of acquiring the second contact coordinates and storing and holding the acquired second contact coordinates in the storage unit 54 while changing the second contact position by controlling driving of the spindle drive mechanism 52 to move the stylus 10 in the first axis direction X, until acquiring, as the second contact coordinates, second burr root coordinates that are second virtual line coordinates on a second virtual line passing through the second reference coordinates and the logical coordinates E and are closest to the logical coordinates E in a resolution at which the spindle drive mechanism 52 moves the stylus 10. Thereafter, the second burr shape acquisition unit 16 acquires a second width size of the root portion of the second burr 32 based on the logical coordinates E and the second burr root coordinates.

In this example, the second contact position at which the second burr shape acquisition unit 16 initially brings the stylus 10 into contact is in the middle between the second reference position P2 and the corner 6. When repeating the second contact coordinate acquisition operation, the second burr shape acquisition unit 16 uses a binary search method and determines the second contact position at which the stylus 10 is to be brought into contact next time, based on: one set of coordinates selected from the second reference coordinates, the logical coordinates E, and the second contact coordinates of the second contact position at which the stylus 10 is brought into contact second most recently, based on the difference between the component in the second axis direction Y of the second contact coordinates of the second contact position at which the stylus 10 is brought into contact most recently and the component in the second axis direction Y of the second virtual line coordinates; and the second contact coordinates of the second contact position at which the stylus 10 is brought into contact most recently.

The droop shape acquisition unit 17 acquires the shape of the droop 33 when the shape of the corner 6 of the workpiece 5 is determined to be a shape with the droop 33. In other words, the droop shape acquisition unit 17 calculates a droop depth H3 based on the first corner coordinates and the logical coordinates E. Specifically, the difference between the component in the first axis direction X of the first corner coordinates F1 and the component in the first axis direction X of the logical coordinates E of the corner 6 is calculated and acquired as droop depth H3.

The droop shape acquisition unit 17 also controls driving of the spindle drive mechanism 52 to bring the stylus 10 into contact with a first contact position between the first reference position P1 and the corner 6 from the first axis direction X, acquires the first contact coordinates of the first contact position based on the contact signal V, and stores and holds the acquired first contact coordinates in the storage unit 54. After doing so, the droop shape acquisition unit 17 repeats a third contact coordinate acquisition operation of acquiring the first contact coordinates and storing and holding the acquired first contact coordinates in the storage unit 54 while changing the first contact position by controlling driving of the spindle drive mechanism 52 to move the stylus 10 in the second axis direction Y, until acquiring, as the first contact coordinates, droop start coordinates that are first virtual line coordinates on a first virtual line passing through the first reference coordinates and the logical coordinates E and are closest to the logical coordinates E in a resolution at which the spindle drive mechanism 52 moves the stylus 10. Thereafter, the droop shape acquisition unit 17 acquires a third width size on the first surface 7 of the droop 33 based on the droop start coordinates.

In this example, the first contact position at which the droop shape acquisition unit 17 initially brings the stylus 10 into contact is in the middle between the first reference position P1 and the corner 6. When repeating the third contact coordinate acquisition operation, the droop shape acquisition unit 17 uses a binary search method and determines the first contact position at which the stylus 10 is to be brought into contact next time, based on: one set of coordinates selected from the first reference coordinates, the logical coordinates E, and the first contact coordinates of the first contact position at which the stylus 10 is brought into contact second most recently, based on the difference between the component in the first axis direction X of the first contact coordinates of the first contact position at which the stylus 10 is brought into contact most recently and the component in the first axis direction X of the first virtual line coordinates; and the first contact coordinates of the first contact position at which the stylus 10 is brought into contact most recently.

### (Shape Acquisition Method: Steps in Which Shape Acquisition Program Causes Control Unit to Operate)

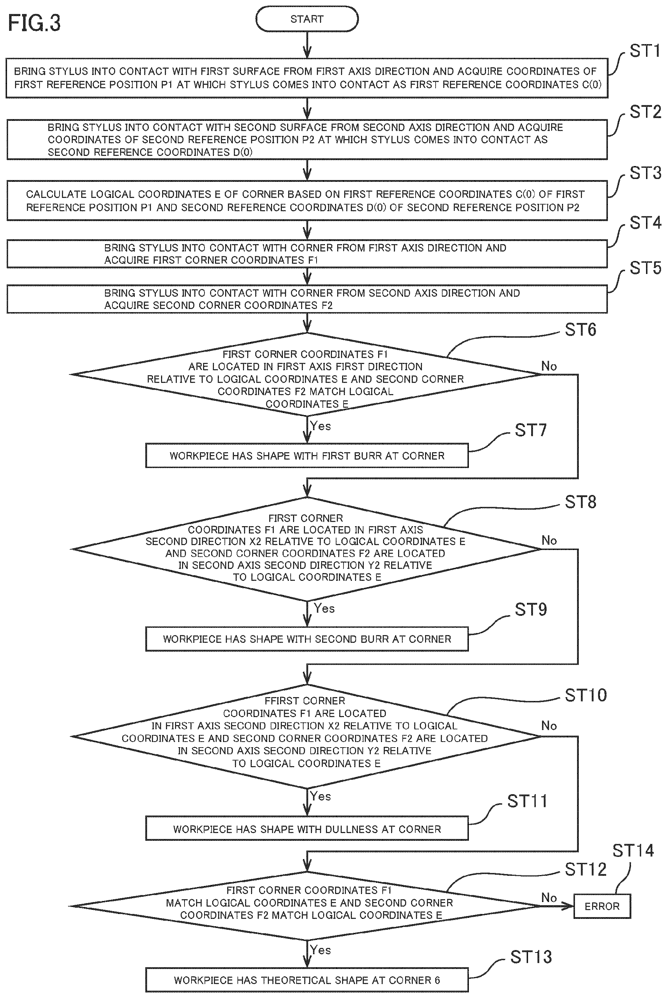

FIG. 3 is a flowchart of a shape acquisition method for acquiring the shape of the corner 6 of the workpiece 5. FIG. 4 is an illustration of the shape acquisition method for acquiring the shape of the corner 6. FIG. 4 illustrates an example in which the workpiece 5 has the first burr 31 at the corner 6. Each step of the shape acquisition method of the shape acquisition device 1 described below is a step in which the shape acquisition program 55 running on the control unit 53 of the machining center 2 controls driving of the shape acquisition device 1.

As illustrated in FIG. 3 and FIG. 4, in the shape acquisition method in this example, first, the machining center 2 brings the stylus 10 into contact with the first surface 7 from the first axis direction X facing the first surface 7, and acquires the coordinates of the first reference position P1 at which the stylus 10 comes into contact, as first reference coordinates C(0) (first reference coordinate acquisition step ST1). Specifically, the stylus movement control unit 11 operates the spindle drive mechanism 52 to bring the stylus 10 into contact with the first reference position P1 on the first surface 7 from the first axis direction X. The coordinate acquisition unit 12 acquires the first reference coordinates C(0) of the first reference position P1 at which the stylus 10 comes into contact. The coordinate acquisition unit 12 stores and holds the acquired first reference coordinates C(0) in the storage unit 54. Here, the first reference position P1 is a position at a distance from the corner 6 in the second axis direction Y to the extent that even when the burrs 31, 32 or droop 33 is generated at the corner 6, these burrs 31, 32 or droop 33 is not touched. Such a first reference position P1 can be set in advance.

The machining center 2 also brings the stylus 10 into contact with the second surface 8 from the second axis direction Y facing the second surface 8 and orthogonal to the first axis direction X, and acquires the coordinates of the second reference position P2 at which the stylus 10 comes into contact, as second reference coordinates D(0) (second reference coordinate acquisition step ST2). In other words, the stylus movement control unit 11 operates the spindle drive mechanism 52 to bring the stylus 10 into contact with the second reference position P2 on the second surface 8 from the second axis direction Y. The coordinate acquisition unit 12 acquires the second reference coordinates D(0) of the second reference position P2 at which the stylus 10 comes into contact. The coordinate acquisition unit 12 stores and holds the acquired second reference coordinates D(0) in the storage unit 54. Here, the second reference position P2 is a position at a distance from the corner 6 in the first axis direction X to the extent that even when the burrs 31, 32 or droop 33 is generated at the corner 6, these burrs 31, 32 or droop 33 is not touched. Such a second reference position P2 can be set in advance.

Here, the logical coordinate acquisition unit 13 calculates the logical coordinates E of the corner 6, based on the first reference coordinates C(0) of the first reference position P1 and the second reference coordinates D(0) of the second reference position P2 (FIG. 3: logical coordinate acquisition step ST3). The logical coordinate acquisition unit 13 stores and holds the calculated logical coordinates E in the storage unit 54. The logical coordinates E are coordinates in design of the corner 6 of the workpiece 5 and are the coordinates of the point of intersection where the first surface 7 and the second surface 8 intersect on a plane including the first axis L1 and the second axis L2. In this example, the first surface 7 extends in the second axis direction Y, and the second surface 8 extends in the first axis direction X. The component in the first axis direction X of the logical coordinates E of the corner 6 is therefore the component in the first axis direction X of the first reference position P1, and the component in the second axis direction Y of the logical coordinates E of the corner 6 is the component in the second axis direction Y of the second reference position P2.

In the shape acquisition method, the logical coordinates E of the corner 6 may be stored and held in advance in the storage unit 54 of the machining center 2. In this case, at the logical coordinate acquisition step ST3, the logical coordinate acquisition unit 13 acquires the logical coordinates E stored and held in the storage unit 54.

Next, the machining center 2 brings the stylus 10 into contact with the corner 6 from the first axis direction X and acquires the first corner coordinates F1 (first corner coordinate acquisition step ST4). In other words, the stylus movement control unit 11 operates the spindle drive mechanism 52 based on the logical coordinates E of the corner 6 stored and held in the storage unit 54 to bring the stylus 10 into contact with the corner 6 from the first axis direction X. The coordinate acquisition unit 12 acquires the first corner coordinates F1 of the corner 6 at which the stylus 10 is brought into contact from the first axis direction X. The coordinate acquisition unit 12 stores and holds the acquired first corner coordinates F1 in the storage unit 54.

Further, the machining center 2 brings the stylus 10 into contact with the corner 6 from the second axis direction Y and acquires the second corner coordinates F2 (second corner coordinate acquisition step ST5). In other words, the stylus movement control unit 11 operates the spindle drive mechanism 52 based on the logical coordinates E to bring the stylus 10 into contact with the corner 6 from the second axis direction Y. The coordinate acquisition unit 12 acquires the second corner coordinates F2 of the corner 6 at which the stylus 10 is brought into contact from the second axis direction Y. The coordinate acquisition unit 12 stores and holds the acquired second corner coordinates F2 in the storage unit 54.

Here, the shape determination unit 14 compares the first corner coordinates F1 and the second corner coordinates F2 individually with the logical coordinates E and acquires the shape of the corner 6 (shape determination steps ST6 to ST14).

In other words, if the first corner coordinates F1 are located in the first axis first direction X1 relative to the logical coordinates E and the second corner coordinates F2 match the logical coordinates E (shape determination step ST6), the shape determination unit 14 acquires that the workpiece 5 has a shape with the first burr 31 extending in the first axis first direction X1 at the corner 6 (shape determination step ST7).

If the first corner coordinates F1 match the logical coordinates E and the second corner coordinates F2 are located in the second axis first direction Y1 relative to the logical coordinates E (shape determination step ST8), the shape determination unit 14 acquires that the workpiece 5 has a shape with the second burr 32 extending in the second axis first direction Y1 at the corner 6 (shape determination step ST9).

Further, if the first corner coordinates F1 are located in the first axis second direction X2 relative to the logical coordinates E and the second corner coordinates F2 are located in the second axis second direction Y2 relative to the logical coordinates E (shape determination step ST10), the shape determination unit 14 acquires that the workpiece 5 has a shape with the droop 33 at the corner 6 (shape determination step ST11). The droop 33 refers to a state in which the ridge of the corner 6 is shaved off. In other words, the end on the second surface 8 side of the first surface 7 is shaved off in the first axis second direction X2, and the end on the first surface 7 side of the first surface 7 is shaved off in the second axis second direction Y2.

If the first corner coordinates F1 match the logical coordinates E and the second corner coordinates F2 match the logical coordinates E (shape determination step ST12), the shape determination unit 14 acquires that the corner 6 of the workpiece 5 has a theoretical shape (shape determination step ST13). If none of the above applies, an error is output (shape determination step ST14).

### (First Burr Shape Acquisition Step)

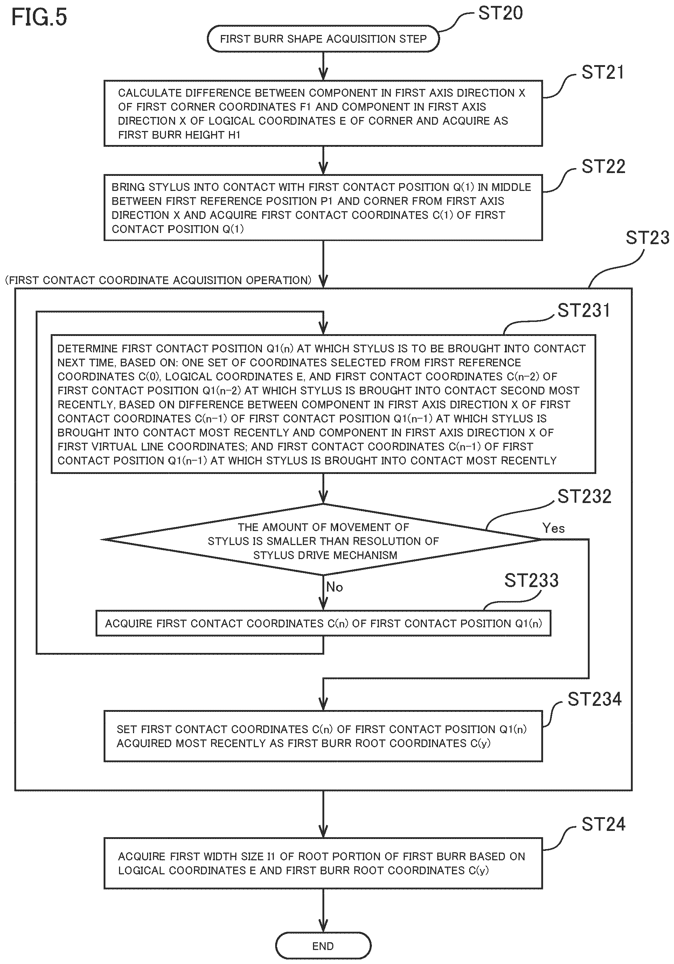

If it is determined at step ST7 that the workpiece 5 has a shape with the first burr 31 at the corner 6, the process moves to first burr shape acquisition step ST20. FIG. 5 is a flowchart of first burr shape acquisition step ST20. FIG. 6 is an illustration of first burr shape acquisition step ST20. As illustrated in FIG. 5, at first burr shape acquisition step ST20, first, the first burr shape acquisition unit 15 calculates the height of the first burr 31 in the first axis direction X. In other words, the difference between the component in the first axis direction X of the first corner coordinates F1 and the component in the first axis direction X of the logical coordinates E of the corner 6 is calculated and acquired as the first burr height H1 (first burr height acquisition step ST21).

Next, the first burr shape acquisition unit 15 brings the stylus 10 into contact with the first contact position Q(1) between the first reference position P1 and the corner 6 from the first axis direction X and acquires the first contact coordinates C(1) of the first contact position Q(1) (step ST22). In other words, the first burr shape acquisition unit 15 operates the spindle drive mechanism 52 based on the first reference coordinates C(0) and the logical coordinates E to bring the stylus 10 into contact with the first contact position Q(1) from the first axis direction X. The coordinate acquisition unit 12 acquires the first contact coordinates C(1) of the first contact position Q(1).

After doing so, the first burr shape acquisition unit 15 repeats a first contact coordinate acquisition operation of acquiring the first contact coordinates C(n) while changing the first contact position Q1 by moving the stylus 10 in the second axis direction Y, until acquiring, as the first contact coordinates C(n), first burr root coordinates C(y) that are first virtual line coordinates G1 on a first virtual line R1 passing through the first reference coordinates C(0) and the logical coordinates E and are closest to the logical coordinates E in a resolution of the spindle drive mechanism 52 (ST23).

In this example, the first surface 7 extends in the second axis direction Y. The first virtual line R1 is therefore a line extending in the second axis direction Y along the first surface 7. Thus, the first burr shape acquisition unit 15 which controls the first contact coordinate acquisition operation determines that the first contact coordinates C(n) are first virtual line coordinates G1 on the first virtual line R1 if a value obtained by subtracting the component in the first axis direction X of the first reference coordinates C(0) from the component in the first axis direction X of the first contact coordinates C(n) is 0. On the other hand, the first burr shape acquisition unit 15 determines that the first contact coordinates C(n) are not first virtual line coordinates G1 on the first virtual line R1 if a value obtained by subtracting the component in the first axis direction X of the first reference coordinates C(0) from the component in the first axis direction X of the first contact coordinates C(n) is greater than 0.

In this example, a binary search method is used to acquire the first burr root coordinates C(y) that are first virtual line coordinates G1 on the first virtual line R1 passing through the first reference coordinates C(0) and the logical coordinates E and are closest to the logical coordinates E. In other words, in a region without the first burr 31 on the first surface 7, the value of the first contact coordinates C is that of the first virtual line coordinates G1. A region with the first burr 31 on the first surface 7 is always located in the second axis first direction Y1 relative to the region without the first burr 31. Further, since the region with the first burr 31 on the first surface 7 is higher in the first axis first direction X1 by the amount of the first burr 31, the component in the first axis direction X of the first contact coordinates C(n) is greater than the first virtual line coordinates G1 by the amount of the first burr 31. A binary search method therefore can be used to acquire the first burr root coordinates C(y) that are first virtual line coordinates G1 on the first virtual line R1 passing through the first reference coordinates C(0) and the logical coordinates E and are closest to the logical coordinates E.

In the binary search method, as illustrated in FIG. 5, the first contact position Q(1) at step ST22 at which the stylus 10 is initially brought into contact at step ST22 is set in the middle between the first reference position P1 and the corner 6. When the first contact coordinate acquisition operation is repeated n times at step ST23, the first burr shape acquisition unit 15 determines the first contact position Q(n) at which the stylus 10 is to be brought into contact next time, based on: one set of coordinates selected from the first reference coordinates C(0), the logical coordinates E, and the first contact coordinates C(n-2) of the first contact position Q(n-2) at which the stylus 10 is brought into contact second most recently, based on the difference between the component in the first axis direction X of the first contact coordinates C(n-1) of the first contact position Q(n-1) at which the stylus 10 is brought into contact most recently and the component in the first axis direction X of the first virtual line coordinates; and the first contact coordinates C(n-1) of the first contact position Q(n-1) at which the stylus 10 is brought into contact most recently (step ST231).

Here, if the amount of movement of the stylus 10 from the first contact coordinates C(n-1) to the first contact position Q(n) is greater than the resolution of the spindle drive mechanism 52 (step ST232: No), the first burr shape acquisition unit 15 brings the stylus 10 into contact with the first contact position Q(n). The coordinate acquisition unit 12 acquires the first contact coordinates C(n) of the first contact position Q(n) and stores and holds the acquired first contact coordinates C(n) in the storage unit 54 (step ST233).

On the other hand, if the amount of movement of the stylus 10 from the first contact coordinates C(n-1) to the first contact position Q(n) is smaller than the resolution of the spindle drive mechanism 52 (step ST232: Yes), the first burr shape acquisition unit 15 sets the acquired first contact coordinates C(n) of the first contact position Q(n) as the first burr root coordinates C(y) (step ST234).

For example, if the first contact position Q(1) of the first contact position Q(1) is first virtual line coordinates G1 on the first virtual line R1, the first burr shape acquisition unit 15 sets the first contact position Q(2) at which the stylus 10 is to be brought into contact next time, in the middle between the first contact position Q(1) and the corner 6. On the other hand, if the first contact position Q(1) of the first contact position Q(1) is located in the first axis first direction X1 relative to the first virtual line coordinates G1 on the first virtual line R1, the first burr shape acquisition unit 15 sets the first contact position Q(2) at which the stylus 10 is to be brought into contact next time, in the middle between the first contact position Q(1) and the first reference position P1.

Here, if the first contact position Q(2) of the first contact position Q(2) is first virtual line coordinates G1 on the first virtual line R1, the first burr shape acquisition unit 15 sets the first contact position Q(3) at which the stylus 10 is to be brought into contact next time, closer to the corner 6 relative to the first contact position Q(2). In other words, in this case, the difference between the component in the first axis direction X of the first contact coordinates C(2) of the first contact position Q(2) at which the stylus 10 is brought into contact most recently and the component in the first axis direction X of the first virtual line coordinates is 0. The first burr shape acquisition unit 15 therefore selects the logical coordinates E from the first reference coordinates C(0) and the logical coordinates E and sets the first contact position Q(3) in the middle between the first contact position Q(2) and the logical coordinates E. Thereafter, if the first contact position Q(3) of the first contact position Q(3) is first virtual line coordinates G1 on the first virtual line R1, the first burr shape acquisition unit 15 sets the first contact position Q(4) at which the stylus 10 is to be brought into contact next time, closer to the logical coordinates E relative to the first contact position Q(3). In other words, in this case, the difference between the component in the first axis direction X of the first contact coordinates C(2) of the first contact position Q(2) at which the stylus 10 is brought into contact most recently and the component in the first axis direction X of the first virtual line coordinates is 0. The first burr shape acquisition unit 15 therefore selects the logical coordinates E from the first reference coordinates C(0), the logical coordinates E, and the first contact position Q(2), and sets the first contact position Q(4) in the middle between the first contact position Q(3) and the logical coordinates E. On the other hand, if the first contact position Q(3) of the first contact position Q(3) is in the first axis first direction X1 relative to the first virtual line coordinates G1 on the first virtual line R1, the first burr shape acquisition unit 15 sets the first contact position Q(4) at which the stylus 10 is to be brought into contact next time, closer to the first contact position Q(2) relative to the first contact position Q(3). In other words, in this case, the difference between the component in the first axis direction X of the first contact coordinates C(2) of the first contact position Q(2) at which the stylus 10 is brought into contact most recently and the component in the first axis direction X of the first virtual line coordinates is greater than 0. The first burr shape acquisition unit 15 therefore selects the first contact position Q(2) from the first reference coordinates C(0), the logical coordinates E, and the first contact position Q(2), and sets the first contact position Q(4) in the middle between the first contact position Q(3) and the first contact position Q(2).

Subsequently, if the first contact position Q(n) is first virtual line coordinates G1, the search area is limited by moving the stylus 10 in the second axis first direction Y1, and if the first contact position Q(n) is in the first axis first direction of the first virtual line coordinates G1, the search is continued while limiting the search area by moving the stylus 10 in the second axis second direction Y2. At the point in time when the amount of movement of the stylus 10 becomes smaller than the resolution of the spindle drive mechanism 52, the first burr shape acquisition unit 15 sets the acquired first contact coordinates C(n) of the first contact position Q(n) as the first burr root coordinates C(y).

Thereafter, the first burr shape acquisition unit 15 acquires the thickness of the root portion of the first burr 31 based on the logical coordinates E and the first burr root coordinates C(y) (step ST24). In other words, at steps ST22 and ST23, the coordinate acquisition unit 12 acquires, as the first burr root coordinates C(y), the coordinates on the first virtual line R1 of the first burr 31 rising position where the first burr 31 rises on the first surface 7. The first burr shape acquisition unit 15 therefore acquires the difference between the first burr root coordinates C(y) and the logical coordinates E as the first width size I1 of the root portion of the first burr 31. Thus, the first burr shape acquisition unit 15 can acquire the shape of the first burr 31 present at the corner 6.

Step ST21 for acquiring the first burr height H1 may be performed after step ST24 for acquiring the first width size I1 of the root portion of the first burr 31.

### (Second Burr Shape Acquisition Step)

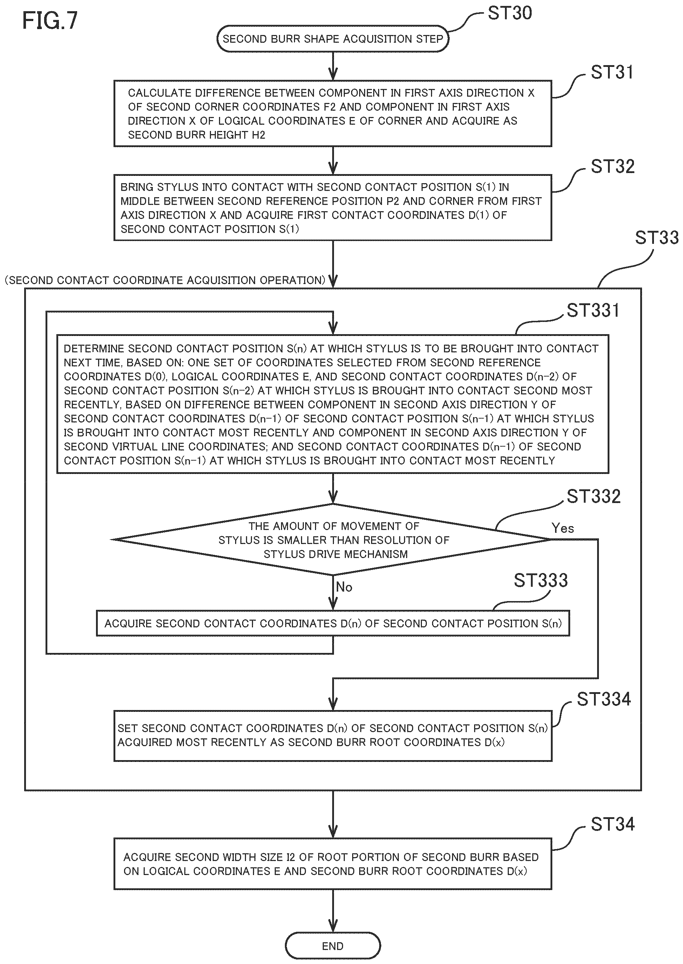

If it is determined at step ST9 that the workpiece 5 has a shape with the second burr 32 at the corner 6, the process moves to second burr shape acquisition step ST30. FIG. 7 is a flowchart of second burr shape acquisition step ST30. FIG. 8 is an illustration of second burr shape acquisition step ST30. As illustrated in FIG. 7, at second burr shape acquisition step ST30, first, the second burr shape acquisition unit 16 calculates the height of the second burr 32 in the second axis direction Y. In other words, the difference between the component in the second axis direction Y of the second corner coordinates F2 and the component in the second axis direction Y of the logical coordinates E of the corner 6 is calculated and acquired as second burr height H2 (step ST31).

Next, the second burr shape acquisition unit 16 brings the stylus 10 into contact with the second contact position S(1) between the second reference position P2 and the corner 6 from the second axis direction Y and acquires the second contact coordinates D(1) of the second contact position S(1) (step ST32). In other words, the second burr shape acquisition unit 16 operates the spindle drive mechanism 52 based on the second reference coordinates D(0) and the logical coordinates E to bring the stylus 10 into contact with the second contact position S(1) from the second axis direction Y. The coordinate acquisition unit 12 acquires the second contact coordinates D(1) of the second contact position S(1) and stores and holds the acquired second contact coordinates D(1) in the storage unit 54.

After doing so, the second burr shape acquisition unit 16 repeats a second contact coordinate acquisition operation of acquiring the second contact coordinates D(n) while changing the second contact position S by moving the stylus 10 in the first axis direction X, until acquiring, as the second contact coordinates D(n), the second burr root coordinates D(x) that are second virtual line coordinates G2 on the second virtual line R2 passing through the second reference coordinates D(0) and the logical coordinates E and are closest to the logical coordinates E in a resolution of the spindle drive mechanism 52 (step ST33).

Here, in this example, the second surface 8 extends in the first axis direction X. The second virtual line R2 is therefore a line extending in the first axis direction X along the second surface 8. Thus, the second burr shape acquisition unit 16 which controls the second contact coordinate acquisition operation determines that the second contact coordinates D(n) are second virtual line coordinates G2 on the second virtual line R2 if a value obtained by subtracting the component in the second axis direction Y of the second reference coordinates D(0) from the component in the second axis direction Y of the second contact coordinates D(n) is 0. On the other hand, the second burr shape acquisition unit 16 determines that the second contact coordinates D(n) are not second virtual line coordinates G2 on the second virtual line R2 if a value obtained by subtracting the component in the second axis direction Y of the second reference coordinates D(0) from the component in the second axis direction Y of the second contact coordinates D(n) is greater than 0.

In this example, a binary search method is used to acquire the second burr root coordinates D(x) that are second virtual line coordinates G2 on the second virtual line R2 passing through the second reference coordinates D(0) and the logical coordinates E and are closest to the logical coordinates E. In other words, in a region without the second burr 32 on the second surface 8, the value of the second contact coordinates D(n) is that of the second virtual line coordinates G2. A region with the second burr 32 on the second surface 8 is always located in the first axis first direction X1 relative to the region without the second burr 32. Further, since the region with the second burr 32 on the second surface 8 is higher in the second axis first direction Y1 by the amount of the second burr 32, the component in the second axis direction Y of the second contact coordinates D(n) is greater than the second virtual line coordinates G2 by the amount of the second burr 32. A binary search method therefore can be used to acquire the second burr root coordinates D(x) that are second virtual line coordinates G2 on the second virtual line R2 passing through the second reference coordinates D(0) and the logical coordinates E and are closest to the logical coordinates E.

In the binary search method, as illustrated in FIG. 7, the second contact position S(1) at step ST32 at which the stylus 10 is initially brought into contact is set in the middle between the second reference position P2 and the corner 6. When the second contact coordinate acquisition operation is repeated n times at step ST33, the second burr shape acquisition unit 16 determines the second contact position S(n) at which the stylus 10 is to be brought into contact next time, based on: one set of coordinates selected from the second reference coordinates D(0), the logical coordinates E, and the second contact coordinates D(n-2) of the second contact position S(n-2) at which the stylus 10 is brought into contact second most recently, based on the difference between the component in the second axis direction Y of the second contact coordinates D(n-1) of the second contact position S(n-1) at which the stylus 10 is brought into contact most recently and the component in the second axis direction Y of the second virtual line coordinates; and the second contact coordinates D(n-1) of the second contact position S(n-1) at which the stylus 10 is brought into contact most recently (step ST331).

Here, if the amount of movement of the stylus 10 from the second contact coordinates D(n-1) to the second contact position S(n) is greater than the resolution of the spindle drive mechanism 52 (step ST332: No), the second burr shape acquisition unit 16 brings the stylus 10 into contact with the second contact position S(n). The coordinate acquisition unit 12 acquires the second contact coordinates D(n) of the second contact position S(n) and stores and holds the acquired second contact coordinates D(n) in the storage unit 54 (step ST333).

On the other hand, if the amount of movement of the stylus 10 from the second contact coordinates D(n-1) to the second contact position S(n) is smaller than the resolution of the spindle drive mechanism 52 (step ST332: Yes), the second burr shape acquisition unit 16 sets the acquired second contact coordinates D(n) of the second contact position S(n) as the second burr root coordinates D(x) (step ST334).

Thereafter, the second burr shape acquisition unit 16 acquires the thickness of the root portion of the second burr 32 based on the logical coordinates E and the second burr root coordinates D(x) (step ST34). In other words, at steps ST32 and ST33, the coordinate acquisition unit 12 acquires, as the second burr root coordinates D(x), the coordinates on the second virtual line R2 of the second burr 32 rising position where the second burr 32 rises on the second surface 8. The second burr shape acquisition unit 16 therefore acquires the difference between the second burr root coordinates D(x) and the logical coordinates E as the second width size I2 of the root portion of the second burr 32. Thus, the second burr shape acquisition unit 16 can acquire the shape of the second burr 32 present at the corner 6.

Step ST31 for acquiring the second burr height H2 may be performed after step ST34 for acquiring the second width size I2 of the root portion of the second burr 32.

### (droop Shape Acquisition Step)

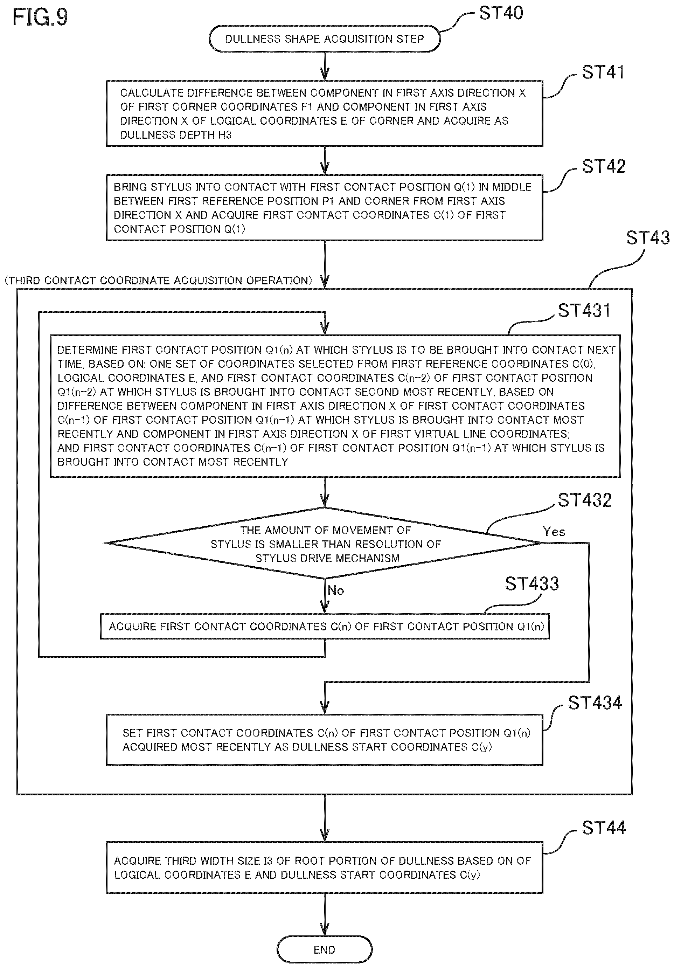

If it is determined at step ST11 that the workpiece 5 has a shape with the droop 33 at the corners 6, the process moves to droop shape acquisition step ST40. FIG. 9 is a flowchart of droop shape acquisition step ST40. FIG. 10 is an illustration of droop shape acquisition step ST40. As illustrated in FIG. 9, at droop shape acquisition step ST40, first, the droop shape acquisition unit 17 calculates the depth of the droop 33 in the first axis direction X. In other words, the difference between the component in the first axis direction X of the first corner coordinates F1 and the component in the first axis direction X of the logical coordinates E of the corner 6 is calculated and acquired as droop depth H3 (step ST41).

Next, the droop shape acquisition unit 17 brings the stylus 10 into contact with the first contact position Q(1) between the first reference position P1 and the corner 6 from the first axis direction X and acquires the first contact coordinates C(1) of the first contact position Q(1) (step ST42). In other words, the droop shape acquisition unit 17 operates the spindle drive mechanism 52 based on the first reference coordinates C(0) and the logical coordinates E to bring the stylus 10 into contact with the first contact position Q(1) from the first axis direction X. The coordinate acquisition unit 12 acquires the first contact coordinates C(1) of the first contact position Q(1) and stores and holds the acquired first contact coordinates C(1) in the storage unit 54.

After doing so, the droop shape acquisition unit 17 repeats a third contact coordinate acquisition operation of acquiring the first contact coordinates C(n) while changing the first contact position Q1 by moving the stylus 10 in the second axis direction Y, until acquiring, as the first contact coordinates C(n), the droop start coordinates C(y) that are first virtual line coordinates G1 on the first virtual line R1 passing through the first reference coordinates C(0) and the logical coordinates E and are closest to the logical coordinates E in a resolution of the spindle drive mechanism 52 (step ST43).

In this example, the first surface 7 extends in the second axis direction Y. The first virtual line R1 is therefore a line extending in the second axis direction Y along the first surface 7. Thus, the droop shape acquisition unit 17 which controls the first contact coordinate acquisition operation determines that the first contact coordinates C(n) are first virtual line coordinates G1 on the first virtual line R1 if a value obtained by subtracting the component in the first axis direction X of the first reference coordinates C(0) from the component in the first axis direction X of the first contact coordinates C(n) is 0. On the other hand, the droop shape acquisition unit 17 determines that the first contact coordinates C(n) are not first virtual line coordinates G1 on the first virtual line R1 if a value obtained by subtracting the component in the first axis direction X of the first reference coordinates C(0) from the component in the first axis direction X of the first contact coordinates C(n) is smaller than 0.

In this example, a binary search method is used to acquire the droop start coordinates C(y) that are first virtual line coordinates G1 on the first virtual line R1 passing through the first reference coordinates C(0) and the logical coordinates E and are closest to the logical coordinates E. In other words, in a region without the droop 33 in the first surface 7, the value of the first contact coordinates C is that of the first virtual line coordinates G1. A region with the droop 33 in the first surface 7 is always located in the second axis first direction Y1 relative to the region without the droop 33. Further, since the region with the droop 33 in the first surface 7 is lower in the first axis second direction X2 by the amount of the droop 33, the component in the first axis direction X of the first contact coordinates C(n) is smaller than the first virtual line coordinates G1 by the amount of the droop 33. A binary search method therefore can be used to acquire the droop start coordinates C(y) that are first virtual line coordinates G1 on the first virtual line R1 passing through the first reference coordinates C(0) and the logical coordinates E and are closest to the logical coordinates E.

In the binary search method, as illustrated in FIG. 9, the first contact position Q(1) at which the stylus 10 is initially brought into contact at step ST42 is set in the middle between the first reference position P1 and the corner 6. When the first contact coordinate acquisition operation is repeated n times at step ST43, the droop shape acquisition unit 17 determines the first contact position Q(n) at which the stylus 10 is to be brought into contact next time, based on: one set of coordinates selected from the first reference coordinates C(0), the logical coordinates E, and the first contact coordinates C(n-2) of the first contact position Q(n-2) at which the stylus 10 is brought into contact second most recently, based on the difference between the component in the first axis direction X of the first contact coordinates C(n-1) of the first contact position Q(n-1) at which the stylus 10 is brought into contact most recently and the component in the first axis direction X of the first virtual line coordinates; and the first contact coordinates C(n-1) of the first contact position Q(n-1) at which the stylus 10 is brought into contact most recently (step ST431).

Here, if the amount of movement of the stylus 10 from the first contact coordinates C(n-1) to the first contact position Q(n) is greater than the resolution of the spindle drive mechanism 52, the droop shape acquisition unit 17 brings the stylus 10 into contact with the first contact position Q(n). The coordinate acquisition unit 12 acquires the first contact coordinates C(n) of the first contact position Q(n) and stores and holds the acquired first contact coordinates C(n) in the storage unit 54 (step ST432) .

On the other hand, if the amount of movement of the stylus 10 from the first contact coordinates C(n-1) to the first contact position Q(n) is smaller than the resolution of the spindle drive mechanism 52, the droop shape acquisition unit 17 sets the first contact coordinates C(n) of the first contact position Q(n) acquired most recently as the droop start coordinates C(y).

Thereafter, the droop shape acquisition unit 17 acquires the width of the droop 33 in the first surface 7 based on the logical coordinates E and the droop start coordinates C(y) (step ST44). In other words, at steps ST42 and ST43, the coordinate acquisition unit 12 acquires, as the droop start coordinates C(y), the coordinates on the first virtual line R1 of the droop start position where the droop 33 begins in the first surface 7. The droop shape acquisition unit 17 therefore acquires the difference between the droop start coordinates C(y) and the logical coordinates E as the third width size I3 in the first surface 7 of the droop 33. Thus, the droop shape acquisition unit 17 can acquire the shape of the droop 33 present at the corner 6.

Step ST41 for acquiring the droop depth H3 may be performed after step ST44 for acquiring the third width size I3 in the first surface 7 of the droop 33.

### (Operation Effects)

The shape acquisition device 1, the shape acquisition program 55, and the shape acquisition method in this example can acquire the shape of the corner 6 of the workpiece 5 including the first burr 31 or the second burr 32. The shape acquisition method in this example can also acquire the shape of the corner 6 of the workpiece 5 having the droop 33. Further, the shape acquisition method in this example can acquire whether the corner 6 of the workpiece 5 has a theoretical shape.

According to this example, when the workpiece 5 has a shape with the first burr 31 at the corner 6, the coordinates of the first burr 31 rising position where the first burr 31 rises on the first surface 7 are acquired as the first burr root coordinates C(y). The shape determination unit 14 therefore can acquire the first width size I1 of the root portion of the first burr 31, based on the difference between the first burr root coordinates C(y) of the first burr 31 rising position in the second axis direction Y and the logical coordinates E. The shape determination unit 14 can also acquire the height H1 of the first burr 31, based on the difference between the first corner coordinates F1 in the first axis direction X and the logical coordinates E. Thus, the shape determination unit 14 can acquire the shape of the first burr 31 present at the corner 6.

In this example, a binary search method is used to acquire the first burr root coordinates C(y). The number of times the stylus 10 is brought into contact with the first surface 7 therefore can be reduced, compared to a case where the first burr root coordinates C(y) are acquired by repeating the operation of moving the stylus 10 from the first reference position P1 toward the second axis first direction Y1 by the amount of resolution and the operation of moving the stylus 10 in the first axis direction X to bring the stylus 10 into contact with the first surface 7 and acquiring the first contact coordinates C. This method can reduce the time required to acquire the first burr root coordinates C(y).

Further, in this example, when the workpiece 5 has a shape with the second burr 32 at the corner 6, the coordinates of the second burr 32 rising position where the second burr 32 rises on the second surface 8 are acquired as the second burr root coordinates D(x). The shape determination unit 14 therefore can acquire the second width size I2 of the root portion of the second burr 32, based on the difference between the second burr root coordinates D(x) of the second burr 32 rising position in the first axis direction X and the logical coordinates E. The shape determination unit 14 can also acquire the height H2 of the second burr 32, based on the difference between the second corner coordinates F2 in the second axis direction Y and the logical coordinates E. Thus, the shape determination unit 14 can acquire the shape of the second burr 32 present at the corner 6.

In this example, a binary search method is used to acquire the second burr root coordinates D(x). The number of times the stylus 10 is brought into contact with the second surface 8 therefore can be reduced, compared to a case where the second burr root coordinates D(x) are acquired by repeating the operation of moving the stylus 10 from the second reference position P2 toward the first axis first direction X1 by the amount of resolution and the operation of moving the stylus 10 in the first axis direction X to bring the stylus 10 into contact with the second surface 8 and acquiring the second contact coordinates D(n). This method can reduce the time required to acquire the second burr root coordinates D(x).

Further, in this example, when the workpiece 5 has a shape with the droop 33 at the corner 6, the coordinates of the droop 33 occurring position where the droop 33 occurs in the first surface 7 are acquired as the droop start coordinates C(y). The shape determination unit 14 therefore can acquire the difference between the droop start coordinates C(y) and the logical coordinates E as the third width size I3 of the droop 33. When the droop 33 is present at the corner 6, the first corner coordinates F1 at which the stylus 10 is brought into contact with the corner 6 from the first axis direction X are the droop start coordinates of the droop start position in the second surface 8, that is, the droop depth H3. The shape determination unit 14 therefore can acquire the shape of the droop 33 occurring at the corner 6, based on the droop start coordinates C(y) and the first corner coordinates F1.

In this example, a binary search method is used to acquire the droop start coordinates C(y). The number of times the stylus 10 is brought into contact with the first surface 7 therefore can be reduced, compared to a case where the droop start coordinates C(y) are acquired by repeating the operation of moving the stylus 10 from the first reference position P1 toward the second axis first direction Y1 by the amount of resolution and the operation of moving the stylus 10 in the first axis direction X to bring the stylus 10 into contact with the first surface 7 and acquiring the first contact coordinates C. This method can reduce the time required to acquire the droop start coordinates C(y).

In this example, the stylus 10 includes the first contact portion 23 that can touch the workpiece 5 from the first axis direction X, and the second contact portion 24 that can touch the workpiece 5 from the second axis direction Y. The first contact portion 23 and the second contact portion 24 in the first axis direction X are connected by the annular first depressed curve surface 25 that is depressed to the axis L0 side from the second contact portion 24 toward the first contact portion 23. Therefore, when the first burr 31 rises from the first surface 7, the first contact portion 23 can be brought into contact with the vicinity of the first burr 31 on the first surface 7 without interference between the touch portion 22 of the stylus 10 and the first burr 31. The second contact portion 24 and the first contact portion 23 in the second axis direction Y are connected by the first depressed curve surface 25, and the second contact portion 24 and the shaft 21 are connected by the second depressed curve surface 26 that is depressed to the axis L0 side from the second contact portion 24 toward the shaft 21. Therefore, when the second burr 32 rises from the second surface 8, the second contact portion 24 can be brought into contact with the vicinity of the second burr 32 on the second surface 8 without interference between the touch portion 22 of the stylus 10 and the second burr 32.

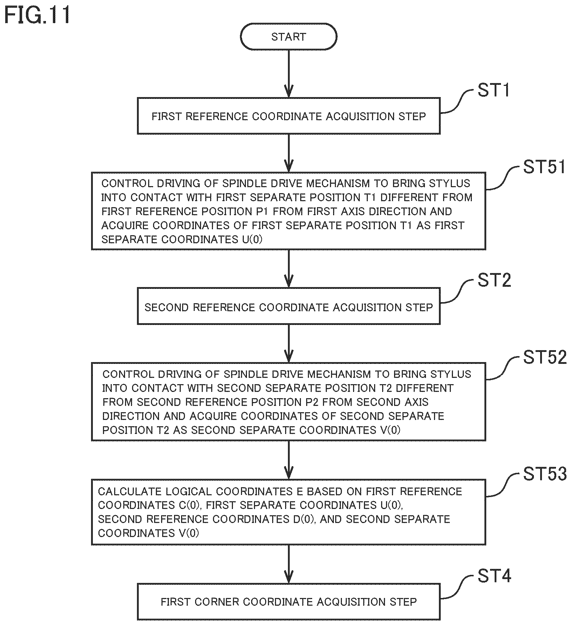

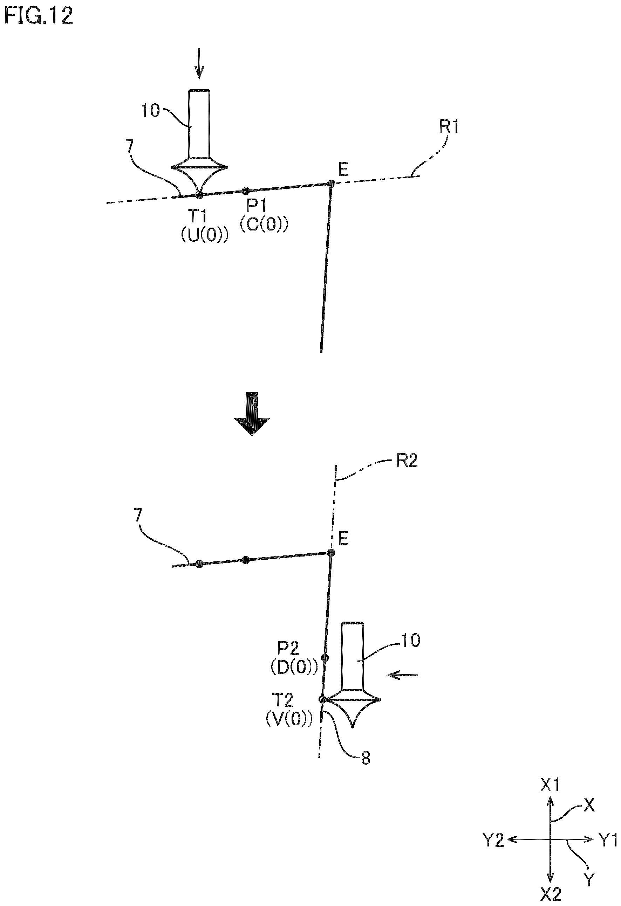

Here, even when the first surface 7 and the second surface 8 that constitute the corner 6 of the workpiece 5 intersect at an angle different from 90°, the shape of the corner 6 of the workpiece 5 including burrs and the shape of the corner 6 of the workpiece 5 having the droop 33 can be acquired by the shape acquisition method in this example. FIG. 11 is a flowchart of a method of calculating the logical coordinates E of the corner 6 when the first surface 7 and the second surface 8 are inclined. FIG. 12 is an illustration of the method of calculating the logical coordinates E of the corner 6 when the first surface 7 and the second surface 8 are inclined.

When the first surface 7 and the second surface 8 are inclined, first separate coordinate acquisition step ST51 is performed between first reference coordinate acquisition step ST1 and second reference coordinate acquisition step ST2 illustrated in FIG. 1 to control driving of the spindle drive mechanism 52 to bring the stylus 10 into contact with a first separate position T1 different from the first reference position P1 from the first axis direction X and acquire the coordinates of the first separate position T1 as first separate coordinates U(0). In addition, the following steps are performed in sequence between second reference coordinate acquisition step ST2 and first corner coordinate acquisition step ST3: second separate coordinate acquisition step ST52 to control driving of the spindle drive mechanism 52 to bring the stylus 10 into contact with a second separate position T2 different from the second reference position P2 from the second axis direction Y and acquire the coordinates of the second separate position T2 as second separate coordinates V(0); and logical coordinate acquisition step ST53 to calculate the logical coordinates E based on the first reference coordinates C(0), the first separate coordinates U(0), the second reference coordinates D(0), and the second separate coordinates V(0).

In other words, after the first reference coordinates C(0) are acquired, the logical coordinate acquisition unit 13 controls driving of the spindle drive mechanism 52 to bring the stylus 10 into contact with the first separate position T1 different from the first reference position Pa from the first axis direction X and acquires the coordinates of the first separate position T1 as the first separate coordinates U(0). After the second reference coordinates are acquired, the logical coordinate acquisition unit 13 controls driving of the spindle drive mechanism 52 to bring the stylus 10 into contact with the second separate position T1 different from the second reference position P1 from the second axis direction Y and acquires the coordinates of the second separate position T1 as the second separate coordinates V(0). Thereafter, the logical coordinate acquisition unit 13 calculates the logical coordinates E of the corner 6, based on the first reference coordinates C(0), the first separate coordinates U(0), the second reference coordinates D(0), and the second separate coordinates V(0). In other words, the logical coordinate acquisition unit 13 calculates the point of intersection of the first virtual line R1 passing through the first reference coordinates C(0) and the first separate coordinates U(0) and the second virtual line R2 passing through the second reference coordinates D(0) and the second separate coordinates V(0), as the logical coordinates E of the corner 6.

When the first surface 7 and the second surface 8 are inclined, the first burr height H1 of the first burr 31 may be corrected based on the inclination angle of the second surface 8 with respect to the first axis L1. Similarly, the second burr height H2 of the second burr 32 may be corrected based on the inclination angle of the first surface 7 with respect to the first axis L1. This is because the first burr 31 rises in the direction along the second surface 8 and the second burr 32 rises in the direction along the first surface 7.

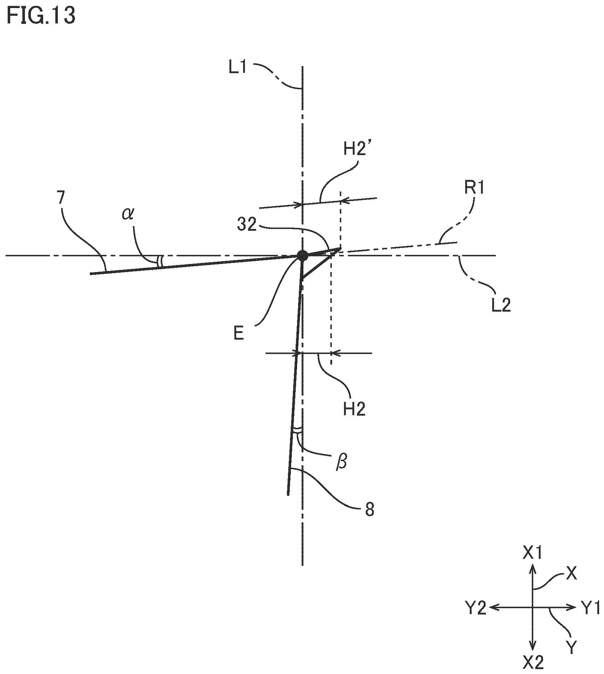

FIG. 12 is an illustration of a case where the second burr height H2 of the second burr 32 is corrected. As illustrated in FIG. 13, the second burr height H2 acquired at second burr shape acquisition step ST30 is the height in the second axis direction Y. Here, when the inclination angle of the first surface 7 from the corner 6 toward the first axis second direction X2 in the second axis direction Y is α, the first burr height H1 of the second burr 32 is divided by COSα, and this value is set as a corrected value H2' of the second burr height H2. The corrected value H2' is the size in which the second height H2 of the second burr 32 is corrected to the height along the first virtual line R1. When the first burr height H1 is to be corrected, the inclination angle of the first surface 7 from the corner 6 toward the first axis second direction X2 in the second axis direction Y is β, and the first burr height H1 can be corrected based on the angle β.

It is noted that the shape of the corner 6 of the workpiece 5 can be acquired in three dimensions by performing the shape acquisition method in this example by moving the stylus 10 in the third axis direction Z orthogonal to the first axis direction X and the second axis direction Y.

## Claims

1. A shape acquisition device for acquiring a shape of a corner where a first surface and a second surface of a workpiece intersect, the shape acquisition device comprising: a machining center including a holder configured to hold the workpiece, a spindle drive mechanism configured to move a spindle in a first axis direction and a second axis direction orthogonal to each other, a control unit, and a storage unit; a stylus; and a contact sensor attached to the spindle to hold the stylus, the contact sensor being configured to input a contact signal to the control unit when the stylus comes into contact with the workpiece, wherein
the control unit includes a stylus movement control unit configured to control driving of the spindle drive mechanism and control movement of the stylus, a coordinate acquisition unit configured to acquire coordinates of a contact position at which the stylus comes into contact with the workpiece, based on the contact signal, and store and hold the acquired coordinates in the storage unit, and a shape determination unit configured to determine a shape of the corner of the workpiece based on the coordinates,
the stylus movement control unit brings the stylus into contact with the first surface from the first axis direction facing the first surface, and then brings the stylus into contact with the second surface from the second axis direction facing the second surface and orthogonal to the first axis direction, and then brings the stylus into contact with the corner from the first axis direction based on logical coordinates of the corner, and thereafter brings the stylus into contact with the corner from the second axis direction based on the logical coordinates,
the coordinate acquisition unit acquires, as first reference coordinates, coordinates of a first reference position at which the stylus initially comes into contact with the first surface, acquires, as second reference coordinates, coordinates of a second reference position at which the stylus initially comes into contact with the second surface, acquires, as first corner coordinates, coordinates at which the stylus comes into contact with the corner from the first axis direction, and acquires, as second corner coordinates, coordinates at which the stylus comes into contact with the corner from the second axis direction,
the shape determination unit compares the first corner coordinates and the second corner coordinates individually with the logical coordinates, letting a direction from the second reference position toward the corner in the first axis direction be a first axis first direction, a direction opposite the first axis first direction be a first axis second direction, a direction from the first reference position toward the corner in the second axis direction be a second axis first direction, and a direction opposite the second axis first direction be a second axis second direction, when the first corner coordinates are located in the first axis first direction relative to the logical coordinates and the second corner coordinates match the logical coordinates, the shape determination unit determines that the workpiece has a shape with a first burr extending in the first axis first direction at the corner, and when the first corner coordinates match the logical coordinates and the second corner coordinates are located in the second axis first direction relative to the logical coordinates, the shape determination unit determines that the workpiece has a shape with a second burr extending in the second axis first direction at the corner.

2. The shape acquisition device according to claim 1, wherein when the first corner coordinates are located in the first axis second direction relative to the logical coordinates and the second corner coordinates are located in the second axis second direction relative to the logical coordinates, the shape determination unit determines that the workpiece has a shape with a droop at the corner.

3. The shape acquisition device according to claim 1, wherein when the first corner coordinates match the logical coordinates and the second corner coordinates match the logical coordinates, the shape determination unit determines that the workpiece has a theoretical shape at the corner.

4. The shape acquisition device according to claim 1, wherein
the logical coordinates are stored and held in the storage unit, and
the stylus movement control unit acquires the logical coordinates by referring to the storage unit.

5. The shape acquisition device according to claim 1, wherein the control unit includes a logical coordinate acquisition unit configured to calculate the logical coordinates, based on the first reference coordinates and the second reference coordinates.

6. The shape acquisition device according to claim 1, wherein
the control unit includes a logical coordinate acquisition unit configured to calculate the logical coordinates,
the logical coordinate acquisition unit controls driving of the spindle drive mechanism to bring the stylus into contact with a first separate position different from the first reference position from the first axis direction and acquires coordinates of the first separate position as first separate coordinates after the first reference coordinates are acquired, controls driving of the spindle drive mechanism to bring the stylus into contact with a second separate position different from the second reference position from the second axis direction and acquires coordinates of the second separate position as second separate coordinates after the second reference coordinates are acquired, and calculates the logical coordinates based on the first reference coordinates, the first separate coordinates, the second reference coordinates, and the second separate coordinates.

7. The shape acquisition device according to claim 1, wherein
the control unit includes a first burr shape acquisition unit configured to acquire a shape of the first burr when the workpiece is determined to have a shape with the first burr at the corner, and
the first burr shape acquisition unit controls driving of the spindle drive mechanism to bring the stylus into contact with a first contact position between the first reference position and the corner from the first axis direction, acquires first contact coordinates of the first contact position based on the contact signal, and stores and holds the acquired first contact coordinates in the storage unit, thereafter repeats a first contact coordinate acquisition operation of acquiring the first contact coordinates and storing and holding the acquired first contact coordinates in the storage unit while changing the first contact position by controlling driving of the spindle drive mechanism to move the stylus in the second axis direction, until acquiring, as the first contact coordinates, first burr root coordinates that are first virtual line coordinates on a first virtual line passing through the first reference coordinates and the logical coordinates and are closest to the logical coordinates in a resolution at which the spindle drive mechanism moves the stylus, and thereafter acquires a first width size of a root portion of the first burr based on the logical coordinates and the first burr root coordinates.

8. The shape acquisition device according to claim 7, wherein the first contact position at which the first burr shape acquisition unit initially brings the stylus into contact is in a middle between the first reference position and the corner, and when the first contact coordinate acquisition operation is repeated, a binary search method is used to determine the first contact position at which the stylus is to be brought into contact next time, based on: one set of coordinates selected from the first reference coordinates, the logical coordinates, and the first contact coordinates of the first contact position at which the stylus is brought into contact second most recently, based on a difference between a component in the first axis direction of the first contact coordinates of the first contact position at which the stylus is brought into contact most recently and a component in the first axis direction of the first virtual line coordinates; and the first contact coordinates of the first contact position at which the stylus is brought into contact most recently.

9. The shape acquisition device according to claim 1, wherein
the control unit includes a second burr shape acquisition unit configured to acquire a shape of the second burr when the workpiece is determined to have a shape with the second burr at the corner, and
the second burr shape acquisition unit controls driving of the spindle drive mechanism to bring the stylus into contact with a second contact position between the second reference position and the corner from the second axis direction, acquires second contact coordinates of the second contact position based on the contact signal, and stores and holds the acquired second contact coordinates in the storage unit, thereafter repeats a second contact coordinate acquisition operation of acquiring the second contact coordinates and storing and holding the acquired second contact coordinates in the storage unit while changing the second contact position by controlling driving of the spindle drive mechanism to move the stylus in the first axis direction, until acquiring, as the second contact coordinates, second burr root coordinates that are second virtual line coordinates on a second virtual line passing through the second reference coordinates and the logical coordinates and are closest to the logical coordinates in a resolution at which the spindle drive mechanism moves the stylus, and thereafter acquires a second width size of a root portion of the second burr based on the logical coordinates and the second burr root coordinates.

10. The shape acquisition device according to claim 9, wherein the second contact position at which the second burr shape acquisition unit initially brings the stylus into contact is in a middle between the second reference position and the corner, and when the second contact coordinate acquisition operation is repeated, a binary search method is used to determine the second contact position at which the stylus is to be brought into contact next time, based on: one set of coordinates selected from the second reference coordinates, the logical coordinates, and the second contact coordinates of the second contact position at which the stylus is brought into contact second most recently, based on a difference between a component in the second axis direction of the second contact coordinates of the second contact position at which the stylus is brought into contact most recently and a component in the second axis direction of the second virtual line coordinates; and the second contact coordinates of the second contact position at which the stylus is brought into contact most recently.

11. The shape acquisition device according to claim 2, wherein
the control unit includes a droop shape acquisition unit configured to acquire a shape of the droop when the workpiece is determined to have a shape with the droop at the corner, and
the droop shape acquisition unit controls driving of the spindle drive mechanism to bring the stylus into contact with a first contact position between the first reference position and the corner from the first axis direction, acquires first contact coordinates of the first contact position based on the contact signal, and stores and holds the acquired first contact coordinates in the storage unit, thereafter repeats a third contact coordinate acquisition operation of acquiring the first contact coordinates and storing and holding the acquired first contact coordinates in the storage unit while changing the first contact position by controlling driving of the spindle drive mechanism to move the stylus in the second axis direction, until acquiring, as the first contact coordinates, droop start coordinates that are first virtual line coordinates on a first virtual line passing through the first reference coordinates and the logical coordinates and are closest to the logical coordinates in a resolution at which the spindle drive mechanism moves the stylus, and thereafter acquires a third width size of the first surface of the droop based on the droop start coordinates.

12. The shape acquisition device according to claim 11, wherein the first contact position at which the droop shape acquisition unit initially brings the stylus into contact is in a middle between the first reference position and the corner, and when the third contact coordinate acquisition operation is repeated, a binary search method is used to determine the first contact position at which the stylus is to be brought into contact next time, based on: one set of coordinates selected from the first reference coordinates, the logical coordinates, and the first contact coordinates of the first contact position at which the stylus is brought into contact second most recently, based on a difference between a component in the first axis direction of the first contact coordinates of the first contact position at which the stylus is brought into contact most recently and a component in the first axis direction of the first virtual line coordinates; and the first contact coordinates of the first contact position at which the stylus is brought into contact most recently.

13. The shape acquisition device according to claim 1, wherein
the stylus includes a shaft having an axis extending in the first axis direction and a touch portion located on a distal end side of the shaft,
the touch portion includes a first contact portion located at a distal end in the first axis direction and a second contact portion having an annular shape, the second contact portion surrounding the axis between the shaft and the first contact portion in the first axis direction,
the second contact portion is located on an outer peripheral side of the first contact portion and the shaft when viewed from the first axis direction,
the first contact portion and the second contact portion are connected by a first depressed curve surface having an annular shape and depressed to the axis side from the second contact portion toward the first contact portion,
the second contact portion and the shaft are connected by a second depressed curve surface depressed to the axis side from the second contact portion toward the shaft,
the first contact portion comes into contact with the first surface, and
the second contact portion comes into contact with the second surface.

14. A shape acquisition program that runs on a control unit of a shape acquisition device to acquire a shape of a corner where a first surface and a second surface of a workpiece intersect, the shape acquisition device comprising: a machining center including a holder configured to hold the workpiece, a spindle drive mechanism configured to move a spindle in a first axis direction and a second axis direction orthogonal to each other, the control unit, and a storage unit; a stylus; and a contact sensor attached to the spindle to hold the stylus, the contact sensor being configured to input a contact signal to the control unit when the stylus comes into contact with the workpiece,
the shape acquisition program comprising, in sequence:
a first reference coordinate acquisition step of controlling driving of the spindle drive mechanism to bring the stylus into contact with the first surface from the first axis direction facing the first surface, acquiring coordinates of a first reference position at which the stylus comes into contact, as first reference coordinates, based on the contact signal, and storing and holding the acquired coordinates in the storage unit;
a second reference coordinate acquisition step of controlling driving of the spindle drive mechanism to bring the stylus into contact with the second surface from the second axis direction facing the second surface and orthogonal to the first axis direction, acquiring coordinates of a second reference position at which the stylus comes into contact, as second reference coordinates, based on the contact signal, and storing and holding the acquired coordinates in the storage unit;
a first corner coordinate acquisition step of, letting a direction from the second reference position toward the corner in the first axis direction be a first axis first direction, a direction opposite the first axis first direction be a first axis second direction, a direction from the first reference position toward the corner in the second axis direction be a second axis first direction, and a direction opposite the second axis first direction be a second axis second direction, bringing the stylus into contact with the corner from the first axis direction based on logical coordinates of the corner, acquiring first corner coordinates based on the contact signal, and storing and holding the acquired first corner coordinates in the storage unit;
a second corner coordinate acquisition step of bringing the stylus into contact with the corner from the second axis direction based on the logical coordinates, acquiring second corner coordinates based on the contact signal, and storing and holding the acquired second corner coordinates in the storage unit; and
a shape determination step of comparing the first corner coordinates and the second corner coordinates individually with the logical coordinates, determining that the workpiece has a shape with a first burr extending in the first axis first direction at the corner when the first corner coordinates are located in the first axis first direction relative to the logical coordinates and the second corner coordinates match the logical coordinates, and determining that the workpiece has a shape with a second burr extending in the second axis first direction at the corner when the first corner coordinates match the logical coordinates and the second corner coordinates are located in the second axis first direction relative to the logical coordinates.

15. The shape acquisition program according to claim 14, wherein in the shape determination step, when the first corner coordinates are located in the first axis second direction relative to the logical coordinates and the second corner coordinates are located in the second axis second direction relative to the logical coordinates, the workpiece is determined to have a shape with a droop at the corner.

16. The shape acquisition program according to claim 14, wherein in the shape determination step, when the first corner coordinates match the logical coordinates and the second corner coordinates match the logical coordinates, the workpiece is determined to have a theoretical shape at the corner.

17. The shape acquisition program according to claim 14, further comprising, before the first corner coordinate acquisition step, a logical coordinate acquisition step of acquiring the logical coordinates stored and held in the storage unit.

18. The shape acquisition program according to claim 14, further comprising, between the second reference coordinate acquisition step and the first corner coordinate acquisition step, a logical coordinate acquisition step of calculating the logical coordinates of the corner, based on the first reference coordinates and the second reference coordinates.

19. The shape acquisition program according to claim 14, wherein
a first separate coordinate acquisition step of controlling driving of the spindle drive mechanism to bring the stylus into contact with a first separate position different from the first reference position from the first axis direction and acquiring coordinates of the first separate position as first separate coordinates based on the contact signal is performed between the first reference coordinate acquisition step and the second reference coordinate acquisition step, and
the shape acquisition program further comprises, in sequence, between the second reference coordinate acquisition step and the first corner coordinate acquisition step: a second separate coordinate acquisition step of controlling driving of the spindle drive mechanism to bring the stylus into contact with a second separate position different from the second reference position from the second axis direction and acquiring coordinates of the second separate position as second separate coordinates; and a logical coordinate acquisition step of calculating the logical coordinates based on the first reference coordinates, the first separate coordinates, the second reference coordinates, and the second separate coordinates.

20. The shape acquisition program according to claim 14, further comprising a first burr shape acquisition step of, when the workpiece is determined to have a shape with the first burr at the corner, controlling driving of the spindle drive mechanism to bring the stylus into contact with a first contact position between the first reference position and the corner from the first axis direction, acquiring first contact coordinates of the first contact position based on the contact signal, and storing and holding the acquired first contact coordinates in the storage unit, thereafter repeating a first contact coordinate acquisition operation of acquiring the first contact coordinates and storing and holding the acquired first contact coordinates in the storage unit while changing the first contact position by controlling driving of the spindle drive mechanism to move the stylus in the second axis direction, until acquiring, as the first contact coordinates, first burr root coordinates that are first virtual line coordinates on a first virtual line passing through the first reference coordinates and the logical coordinates and are closest to the logical coordinates in a resolution at which the spindle drive mechanism moves the stylus, and thereafter acquiring a first width size of a root portion of the first burr based on the logical coordinates and the first burr root coordinates.

21. The shape acquisition program according to claim 20, wherein in the first burr shape acquisition step, the first contact position at which the stylus is initially brought into contact is in a middle between the first reference position and the corner, and when the first contact coordinate acquisition operation is repeated, a binary search method is used to determine the first contact position at which the stylus is to be brought into contact next time, based on: one set of coordinates selected from the first reference coordinates, the logical coordinates, and the first contact coordinates of the first contact position at which the stylus is brought into contact second most recently, based on a difference between a component in the first axis direction of the first contact coordinates of the first contact position at which the stylus is brought into contact most recently and a component in the first axis direction of the first virtual line coordinates; and the first contact coordinates of the first contact position at which the stylus is brought into contact most recently.

22. The shape acquisition program according to claim 14, further comprising a second burr shape acquisition step of, when the workpiece is determined to have a shape with the second burr at the corner, controlling driving of the spindle drive mechanism to bring the stylus into contact with a second contact position between the second reference position and the corner from the second axis direction, acquiring second contact coordinates of the second contact position based on the contact signal, and storing and holding the acquired second contact coordinates in the storage unit, thereafter repeating a second contact coordinate acquisition operation of acquiring the second contact coordinates and storing and holding the acquired second contact coordinates in the storage unit while changing the second contact position by controlling driving of the spindle drive mechanism to move the stylus in the first axis direction, until acquiring, as the second contact coordinates, second burr root coordinates that are second virtual line coordinates on a second virtual line passing through the second reference coordinates and the logical coordinates and are closest to the logical coordinates in a resolution at which the spindle drive mechanism moves the stylus, and thereafter acquiring a second width size of a root portion of the second burr based on the logical coordinates and the second burr root coordinates.

23. The shape acquisition program according to claim 22, wherein in the second burr shape acquisition step, the second contact position at which the stylus is initially brought into contact is in a middle between the second reference position and the corner, and when the second contact coordinate acquisition operation is repeated, a binary search method is used to determine the second contact position at which the stylus is to be brought into contact next time, based on: one set of coordinates selected from the second reference coordinates, the logical coordinates, and the second contact coordinates of the second contact position at which the stylus is brought into contact second most recently, based on a difference between a component in the second axis direction of the second contact coordinates of the second contact position at which the stylus is brought into contact most recently and a component in the second axis direction of the second virtual line coordinates; and the second contact coordinates of the second contact position at which the stylus is brought into contact most recently.

24. The shape acquisition program according to claim 15, further comprising a droop shape acquisition step of, when the workpiece is determined to have a shape with the droop at the corner, controlling driving of the spindle drive mechanism to bring the stylus into contact with a first contact position between the first reference position and the corner from the first axis direction, acquiring first contact coordinates of the first contact position based on the contact signal, and storing and holding the acquired first contact coordinates in the storage unit, thereafter repeating a third contact coordinate acquisition operation of acquiring the first contact coordinates and storing and holding the acquired first contact coordinates in the storage unit while changing the first contact position by controlling driving of the spindle drive mechanism to move the stylus in the second axis direction, until acquiring, as the first contact coordinates, droop start coordinates that are first virtual line coordinates on a first virtual line passing through the first reference coordinates and the logical coordinates and are closest to the logical coordinates in a resolution at which the spindle drive mechanism moves the stylus, and thereafter acquiring a third width size of the first surface of the droop based on the droop start coordinates.

25. The shape acquisition program according to claim 24, wherein in the droop shape acquisition step, the first contact position at which the stylus is initially brought into contact is in a middle between the first reference position and the corner, and when the third contact coordinate acquisition operation is repeated, a binary search method is used to determine the first contact position at which the stylus is to be brought into contact next time, based on: one set of coordinates selected from the first reference coordinates, the logical coordinates, and the first contact coordinates of the first contact position at which the stylus is brought into contact second most recently, based on a difference between a component in the first axis direction of the first contact coordinates of the first contact position at which the stylus is brought into contact most recently and a component in the first axis direction of the first virtual line coordinates; and the first contact coordinates of the first contact position at which the stylus is brought into contact most recently.

26. A shape acquisition method for acquiring, by a shape acquisition device, a shape of a corner where a first surface and a second surface of a workpiece intersect, the shape acquisition device comprising: a machining center including a holder configured to hold the workpiece, a spindle drive mechanism configured to move a spindle in a first axis direction and a second axis direction orthogonal to each other, a control unit, and a storage unit; a stylus; and a contact sensor attached to the spindle to hold the stylus, the contact sensor being configured to input a contact signal to the control unit when the stylus comes into contact with the workpiece,
the shape acquisition method comprising:
a first reference coordinate acquisition step of controlling driving of the spindle drive mechanism to bring the stylus into contact with the first surface from the first axis direction facing the first surface, acquiring coordinates of a first reference position at which the stylus comes into contact, as first reference coordinates, based on the contact signal, and storing and holding the acquired coordinates in the storage unit;
a second reference coordinate acquisition step of controlling driving of the spindle drive mechanism to bring the stylus into contact with the second surface from the second axis direction facing the second surface and orthogonal to the first axis direction, acquiring coordinates of a second reference position at which the stylus comes into contact, as second reference coordinates, based on the contact signal, and storing and holding the acquired coordinates in the storage unit;
a first corner coordinate acquisition step of, letting a direction from the second reference position toward the corner in the first axis direction be a first axis first direction, a direction opposite the first axis first direction be a first axis second direction, a direction from the first reference position toward the corner in the second axis direction be a second axis first direction, and a direction opposite the second axis first direction be a second axis second direction, bringing the stylus into contact with the corner from the first axis direction based on logical coordinates of the corner, acquiring first corner coordinates based on the contact signal, and storing and holding the acquired first corner coordinates in the storage unit;
a second corner coordinate acquisition step of bringing the stylus into contact with the corner from the second axis direction based on the logical coordinates, acquiring second corner coordinates based on the contact signal, and storing and holding the acquired second corner coordinates in the storage unit; and
a shape determination step of comparing the first corner coordinates and the second corner coordinates individually with the logical coordinates, determining that the workpiece has a shape with a first burr extending in the first axis first direction at the corner when the first corner coordinates are located in the first axis first direction relative to the logical coordinates and the second corner coordinates match the logical coordinates, and determining that the workpiece has a shape with a second burr extending in the second axis first direction at the corner when the first corner coordinates match the logical coordinates and the second corner coordinates are located in the second axis first direction relative to the logical coordinates.

27. The shape acquisition method according to claim 26, wherein in the shape determination step, when the first corner coordinates are located in the first axis second direction relative to the logical coordinates and the second corner coordinates are located in the second axis second direction relative to the logical coordinates, the workpiece is determined to have a shape with a droop at the corner.

28. The shape acquisition method according to claim 26, wherein in the shape determination step, when the first corner coordinates match the logical coordinates and the second corner coordinates match the logical coordinates, the workpiece is determined to have a theoretical shape at the corner.

29. The shape acquisition method according to claim 26, wherein
the logical coordinates are held in the storage unit in advance, and
the shape acquisition method further comprises, before the first corner coordinate acquisition step, a logical coordinate acquisition step of acquiring the logical coordinates stored and held in the storage unit.

30. The shape acquisition method according to claim 26, further comprising, between the second reference coordinate acquisition step and the first corner coordinate acquisition step, a logical coordinate acquisition step of calculating the logical coordinates of the corner, based on the first reference coordinates and the second reference coordinates.

31. The shape acquisition method according to claim 26, wherein
a first separate coordinate acquisition step of controlling driving of the spindle drive mechanism to bring the stylus into contact with a first separate position different from the first reference position from the first axis direction and acquiring coordinates of the first separate position as first separate coordinates is performed between the first reference coordinate acquisition step and the second reference coordinate acquisition step, and
the shape acquisition method further comprises, in sequence, between the second reference coordinate acquisition step and the first corner coordinate acquisition step: a second separate coordinate acquisition step of controlling driving of the spindle drive mechanism to bring the stylus into contact with a second separate position different from the second reference position from the second axis direction and acquiring coordinates of the second separate position as second separate coordinates; and a logical coordinate acquisition step of calculating the logical coordinates based on the first reference coordinates, the first separate coordinates, the second reference coordinates, and the second separate coordinates.

32. The shape acquisition method according to claim 26, further comprising a first burr shape acquisition step of, when the workpiece is determined to have a shape with the first burr at the corner, controlling driving of the spindle drive mechanism to bring the stylus into contact with a first contact position between the first reference position and the corner from the first axis direction, acquiring first contact coordinates of the first contact position based on the contact signal, and storing and holding the acquired first contact coordinates in the storage unit, thereafter repeating a first contact coordinate acquisition operation of acquiring the first contact coordinates and storing and holding the acquired first contact coordinates in the storage unit while changing the first contact position by controlling driving of the spindle drive mechanism to move the stylus in the second axis direction, until acquiring, as the first contact coordinates, first burr root coordinates that are first virtual line coordinates on a first virtual line passing through the first reference coordinates and the logical coordinates and are closest to the logical coordinates in a resolution at which the spindle drive mechanism moves the stylus, and thereafter acquiring a first width size of a root portion of the first burr based on the logical coordinates and the first burr root coordinates.

33. The shape acquisition method according to claim 32, wherein in the first burr shape acquisition step, the first contact position at which the stylus is initially brought into contact is in a middle between the first reference position and the corner, and when the first contact coordinate acquisition operation is repeated, a binary search method is used to determine the first contact position at which the stylus is to be brought into contact next time, based on: one set of coordinates selected from the first reference coordinates, the logical coordinates, and the first contact coordinates of the first contact position at which the stylus is brought into contact second most recently, based on a difference between a component in the first axis direction of the first contact coordinates of the first contact position at which the stylus is brought into contact most recently and a component in the first axis direction of the first virtual line coordinates; and the first contact coordinates of the first contact position at which the stylus is brought into contact most recently.

34. The shape acquisition method according to claim 26, further comprising a second burr shape acquisition step of, when the workpiece is determined to have a shape with the second burr at the corner, controlling driving of the spindle drive mechanism to bring the stylus into contact with a second contact position between the second reference position and the corner from the second axis direction, acquiring second contact coordinates of the second contact position based on the contact signal, and storing and holding the acquired second contact coordinates in the storage unit, thereafter repeating a second contact coordinate acquisition operation of acquiring the second contact coordinates and storing and holding the acquired second contact coordinates in the storage unit while changing the second contact position by controlling driving of the spindle drive mechanism to move the stylus in the first axis direction, until acquiring, as the second contact coordinates, second burr root coordinates that are second virtual line coordinates on a second virtual line passing through the second reference coordinates and the logical coordinates and are closest to the logical coordinates in a resolution at which the spindle drive mechanism moves the stylus, and thereafter acquiring a second width size of a root portion of the second burr based on the logical coordinates and the second burr root coordinates.

35. The shape acquisition method according to claim 34, wherein in the second burr shape acquisition step, the second contact position at which the stylus is initially brought into contact is in a middle between the second reference position and the corner, and when the second contact coordinate acquisition operation is repeated, a binary search method is used to determine the second contact position at which the stylus is to be brought into contact next time, based on: one set of coordinates selected from the second reference coordinates, the logical coordinates, and the second contact coordinates of the second contact position at which the stylus is brought into contact second most recently, based on a difference between a component in the second axis direction of the second contact coordinates of the second contact position at which the stylus is brought into contact most recently and a component in the second axis direction of the second virtual line coordinates; and the second contact coordinates of the second contact position at which the stylus is brought into contact most recently.

36. The shape acquisition method according to claim 27, further comprising a droop shape acquisition step of, when the workpiece is determined to have a shape with the droop at the corner, controlling driving of the spindle drive mechanism to bring the stylus into contact with a first contact position between the first reference position and the corner from the first axis direction, acquiring first contact coordinates of the first contact position based on the contact signal, and storing and holding the acquired first contact coordinates in the storage unit, thereafter repeating a third contact coordinate acquisition operation of acquiring the first contact coordinates and storing and holding the acquired first contact coordinates in the storage unit while changing the first contact position by controlling driving of the spindle drive mechanism to move the stylus in the second axis direction, until acquiring, as the first contact coordinates, droop start coordinates that are first virtual line coordinates on a first virtual line passing through the first reference coordinates and the logical coordinates and are closest to the logical coordinates in a resolution at which the spindle drive mechanism moves the stylus, and thereafter acquiring a third width size of the first surface of the droop based on the droop start coordinates.

37. The shape acquisition method according to claim 36, wherein in the droop shape acquisition step, the first contact position at which the stylus is initially brought into contact is in a middle between the first reference position and the corner, and when the third contact coordinate acquisition operation is repeated, a binary search method is used to determine the first contact position at which the stylus is to be brought into contact next time, based on: one set of coordinates selected from the first reference coordinates, the logical coordinates, and the first contact coordinates of the first contact position at which the stylus is brought into contact second most recently, based on a difference between a component in the first axis direction of the first contact coordinates of the first contact position at which the stylus is brought into contact most recently and a component in the first axis direction of the first virtual line coordinates; and the first contact coordinates of the first contact position at which the stylus is brought into contact most recently.

38. A stylus comprising a shaft and a touch portion located on a distal end side of the shaft, wherein
the touch portion includes a first contact portion located at a distal end in an axial direction along an axis of the shaft, and a second contact portion having an annular shape, the second contact portion surrounding the axis between the shaft and the first contact portion in the axial direction,
the second contact portion is located on an outer peripheral side of the first contact portion and the shaft when viewed from the axial direction,
the first contact portion and the second contact portion are connected by a first depressed curve surface having an annular shape and depressed to the axis side from the second contact portion toward the first contact portion, and
the second contact portion and the shaft are connected by a second depressed curve surface having an annular shape and depressed to the axis side from the second contact portion toward the shaft.
